# EUROPEAN PATENT APPLICATION

(11) **EP 4 533 930 A1**
(43) Date of publication of application: **09.04.2025**
(21) Application number: 23819807.1
(22) Date of filing: 05.06.2023
(51) Int. Cl.: A01B 63/02, A01B 69/00, G05D 1/02

(54) **AGRICULTURAL MANAGEMENT SYSTEM**

(30) Priority: 08.06.2022 JP 2022092949
(71) Applicant: Kubota Corporation, Osaka 556-8601 (JP)
(72) Inventor: EDO, Shunsuke, Sakai-shi, Osaka 590-0908 (JP); MIYASHITA, Shunsuke, Sakai-shi, Osaka 590-0908 (JP)
(74) Representative: Cabinet Beau de Loménie
(86) International application number: PCT/JP2023/020863
(87) International publication number: WO 2023/238827

(57) **Abstract**

An agricultural management system according to an embodiment includes: a server capable of obtaining implement information concerning a plurality of types of implements from a plurality of users and storing the obtained implement information; and a processing unit capable of setting a size of an alert zone around an implement connected with a work vehicle. The processing unit obtains identification information which identifies the first implement, the processing unit retrieves implement information corresponding to the identification information from the server, and the processing unit sets the size of the alert zone based on the retrieved implement information.

## Description

### TECHNICAL FIELD

The present disclosure relates to agricultural management systems.

### BACKGROUND ART

Research and development is underway to study smart agriculture with the effective use of ICT (Information and Communication Technology) and IoT (Internet of Things) as the next generation of agriculture. Research and development is also underway to study automated and unmanned work vehicles, such as tractors, for use in agricultural fields. For example, work vehicles capable of traveling in an automatic steering mode with the use of a positioning system such as GNSS (Global Navigation Satellite System), which is capable of precise positioning, have been put into practical use.

In addition, research and development is also underway to study the technique of conducting a search of a region around a work vehicle with the use of obstacle sensors to detect obstacles around the work vehicle. For example, Patent Document No. 1 discloses the technique of detecting obstacles around a self-drivable tractor with the use of LiDAR (Light Detection and Ranging) sensors.

### CITATION LIST

### PATENT LITERATURE

Patent Document No. 1: Japanese Laid-Open Patent Publication No. 2019-175059

### SUMMARY OF INVENTION

### TECHNICAL PROBLEM

When an implement is connected with a work vehicle, the work vehicle can perform agricultural work using the implement while automatically traveling in a field.

In some cases, it is desirable that humans do not enter an area near the implement that is performing work in an automatic operation mode. One possible solution is to set an alert zone around the implement and detect whether or not a human is present in that alert zone.

The present disclosure provides techniques for setting an alert zone suitable for an implement connected with a work vehicle.

### SOLUTION TO PROBLEM

An agricultural management system according to an embodiment of the present disclosure includes: a server capable of obtaining implement information concerning a plurality of types of implements from a plurality of users and storing the obtained implement information; and a processing unit capable of setting a size of an alert zone around a first implement connected with a work vehicle, wherein the processing unit obtains identification information which identifies the first implement, the processing unit retrieves implement information corresponding to the identification information from the server, and the processing unit sets the size of the alert zone based on the retrieved implement information.

General or specific aspects of the present disclosure may be implemented using a device, a system, a method, an integrated circuit, a computer program, a non-transitory computer-readable storage medium, or any combination thereof. The computer-readable storage medium may be inclusive of a volatile storage medium or a non-volatile storage medium. The device may include a plurality of devices. In the case where the device includes two or more devices, the two or more devices may be disposed within a single apparatus, or divided over two or more separate apparatuses.

### ADVANTAGEOUS EFFECTS OF INVENTION

According to an embodiment of the present disclosure, implement information concerning a plurality of types of implements, which is provided by a plurality of users, is obtained, and the obtained implement information is accumulated in a server. The processing unit retrieves implement information corresponding to identification information of an implement connected with a work vehicle from the server and sets the size of the alert zone based on the retrieved implement information.

Even when an implement is used of which the information necessary for setting the size of the alert zone is not disclosed by the manufacturer, it is possible to set the size of the alert zone suitable for each implement by using the implement information provided by the users.

### BRIEF DESCRIPTION OF DRAWINGS

FIG. **1** is a diagram providing an overview of an agriculture management system according to an illustrative embodiment of the present disclosure.
FIG. **2** is a side view schematically showing an example of work vehicle and an example of implement that is linked to the work vehicle.
FIG. **3** is a block diagram showing an example configuration of the work vehicle and the implement.
FIG. **4** is a conceptual diagram showing an example of the work vehicle performing positioning based on an RTK-GNSS.
FIG. **5** is a diagram showing an example of operational terminal and an example of operation switches disposed in a cabin.
FIG. **6** is a block diagram showing an example of hardware configuration of a management device and a terminal device.
FIG. **7** is a diagram schematically showing an example of the work vehicle automatically traveling along a target path inside a field.
FIG. **8** is a flowchart showing an example operation of steering control during self-driving.
FIG. **9A** is a diagram showing an example of the work vehicle traveling along a target path **P.**
FIG. **9B** is a diagram showing an example of the work vehicle at a position which is shifted rightward from the target path **P.**
FIG. **9C** is a diagram showing an example of the work vehicle at a position which is shifted leftward from the target path **P.**
FIG. **9D** is a diagram showing an example of the work vehicle oriented in an inclined direction with respect to the target path **P.**
FIG. **10** is a diagram schematically showing an example of state where a plurality of the work vehicles perform self-traveling inside a field and on a road outside the field.
FIG. **11** is a diagram showing an example of a sensing region sensed by sensing devices.
FIG. **12** shows the relationship between sensing regions sensed by LiDAR sensors and search regions in which a search for objects is to be conducted.
FIG. **13** is a diagram showing the relationship between the search regions and the alert zone.
FIG. **14** is a diagram showing an agricultural management system 1 wherein implement information provided by a plurality of users is accumulated in a server.
FIG. **15** is a diagram showing an example of an input window for implement information, which is displayed on the display of the terminal device.
FIG. **16** is a diagram showing an example of the implement information stored in the server.
FIG. **17** is a diagram showing an example of the implement information stored in the server.
FIG. **18** is a flowchart showing an example of the process of setting an alert zone using the implement information stored in the server.
FIG. **19** is a block diagram showing an example of the hardware configuration of the implement.
FIG. **20** is a diagram showing an example of the method of calculating the position of at least part of the external shape of an implement in a local coordinate system.
FIG. **21** is a diagram showing an example of the alert zone set around the implement.
FIG. **22** is a flowchart showing an example of a process that is performed if it is determined that a human is present in the alert zone.
FIG. **23** is a diagram showing an example of the method of calculating the position of at least part of the external shape of an implement in a local coordinate system.
FIG. **24** is a diagram showing an example of the alert zone set around the implement.
FIG. **25** is a diagram showing an example of a plurality of alert zones.

### DESCRIPTION OF EMBODIMENTS

### (Definition of terms)

In the present disclosure, an "agricultural machine" refers to a machine for agricultural applications. The agricultural machine of the present disclosure can be a mobile agricultural machine that is capable of performing agricultural work while traveling. Examples of agricultural machines include tractors, harvesters, rice transplanters, vehicles for crop management, vegetable transplanters, mowers, seeders, spreaders, and mobile robots for agriculture. Not only may a work vehicle such as a tractor function as an "agricultural machine" alone by itself, but also a combination of a work vehicle and an implement that is attached to, or towed by, the work vehicle may function as an "agricultural machine". For the ground surface inside a field, the agricultural machine performs agricultural work such as tilling, seeding, preventive pest control, manure spreading, planting of crops, or harvesting. Such agricultural work or tasks may be referred to as "groundwork", or simply as "work" or "tasks". Travel of a vehicle-type agricultural machine performed while the agricultural machine also performs agricultural work may be referred to as "tasked travel".

"Self-driving" refers to controlling the movement of an agricultural machine by the action of a controller, rather than through manual operations of a driver. An agricultural machine that performs self-driving may be referred to as a "self-driving agricultural machine" or a "robotic agricultural machine". During self-driving, not only the movement of the agricultural machine, but also the operation of agricultural work (e.g., the operation of the implement) may be controlled automatically. In the case where the agricultural machine is a vehicle-type machine, travel of the agricultural machine via self-driving will be referred to as "self-traveling". The controller may control at least one of: steering that is required in the movement of the agricultural machine, adjustment of the moving speed, or beginning and ending of a move. In the case of controlling a work vehicle having an implement attached thereto, the controller may be configured or programmed to control raising or lowering of the implement, beginning and ending of an operation of the implement, and so on. A move based on self-driving may include not only moving of an agricultural machine that goes along a predetermined path toward a destination, but also moving of an agricultural machine that follows a target of tracking. An agricultural machine that performs self-driving may also move partly based on the user's instructions. Moreover, an agricultural machine that performs self-driving may operate not only in a self-driving mode but also in a manual driving mode, where the agricultural machine moves through manual operations of the driver. When performed not manually but through the action of a controller, the steering of an agricultural machine will be referred to as "automatic steering". A portion of, or the entirety of, the controller may reside outside the agricultural machine. Control signals, commands, data, etc. may be communicated between the agricultural machine and a controller residing outside the agricultural machine. An agricultural machine that performs self-driving may move autonomously while sensing the surrounding environment, without any person being involved in the controlling of the movement of the agricultural machine. An agricultural machine that is capable of autonomous movement is able to travel inside the field or outside the field (e.g., on roads) in an unmanned manner. During an autonomous move, operations of detecting and avoiding obstacles may be performed.

A "work plan" is data defining a plan of one or more tasks of agricultural work to be performed by an agricultural machine. The work plan may include, for example, information representing the order of the tasks of agricultural work to be performed by an agricultural machine or the field where each of the tasks of agricultural work is to be performed. The work plan may include information representing the time and the date when each of the tasks of agricultural work is to be performed. The work plan may be created by a processing unit communicating with the agricultural machine to manage the agricultural machine or a processing unit mounted on the agricultural machine. The processing unit can create a work plan based on, for example, information input by the user (agricultural business executive, agricultural worker, etc.) manipulating a terminal device. In this specification, the processing unit communicating with the agricultural machine to manage the agricultural machine will be referred to as a "management device". The management device may manage agricultural work of a plurality agricultural machines. In this case, the management device may create a work plan including information on each task of agricultural work to be performed by each of the plurality of agricultural machines. The work plan may be downloaded to each of the agricultural machines and stored in a storage device in each of the agricultural machines. In order to perform the scheduled agricultural work in accordance with the work plan, each agricultural machine can automatically move to a field and perform the agricultural work.

An "environment map" is data representing, with a predetermined coordinate system, the position or the region of an object existing in the environment where the agricultural machine moves. The environment map may be referred to simply as a "map" or "map data". The coordinate system defining the environment map is, for example, a world coordinate system such as a geographic coordinate system fixed to the globe. Regarding the object existing in the environment, the environment map may include information other than the position (e.g., attribute information or other types of information). The "environment map" encompasses various type of maps such as a point cloud map and a lattice map. Data on a local map or a partial map that is generated or processed in a process of constructing the environment map is also referred to as a "map" or "map data".

An "agricultural road" is a road used mainly for agriculture. An "agricultural road" is not limited to a road paved with asphalt, and encompasses unpaved roads covered with soil, gravel or the like. An "agricultural road" encompasses roads (including private roads) on which only vehicle-type agricultural machines (e.g., work vehicles such as tractors, etc.) are allowed to travel and roads on which general vehicles (automobiles, trucks, buses, etc.) are also allowed to travel. The work vehicles may automatically travel on a general road in addition to an agricultural road. The "general road" is a road maintained for traffic of general vehicles.

### (Embodiments)

Hereinafter, embodiments of the present disclosure will be described. Note, however, that unnecessarily detailed descriptions may be omitted. For example, detailed descriptions on what is well known in the art or redundant descriptions on what is substantially the same configuration may be omitted. This is to avoid lengthy description, and facilitate the understanding of those skilled in the art. The accompanying drawings and the following description, which are provided by the present inventors so that those skilled in the art can sufficiently understand the present disclosure, are not intended to limit the scope of the claims. In the following description, elements having identical or similar functions are denoted by identical reference numerals.

The following embodiments are only exemplary, and the techniques according to the present disclosure are not limited to the following embodiments. For example, numerical values, shapes, materials, steps, orders of steps, layout of a display screen, etc. which are indicated in the following embodiments are only exemplary, and admit of various modifications so long as it makes technological sense. Any one implementation may be combined with another so long as it makes technological sense to do so.

Hereinafter, embodiments in which techniques according to the present disclosure are applied to a work vehicle, such as a tractor, which is an example of agricultural machine, will be mainly described. The techniques according to the present disclosure are also applicable to other types of agricultural machines in addition to the work vehicle such as a tractor.

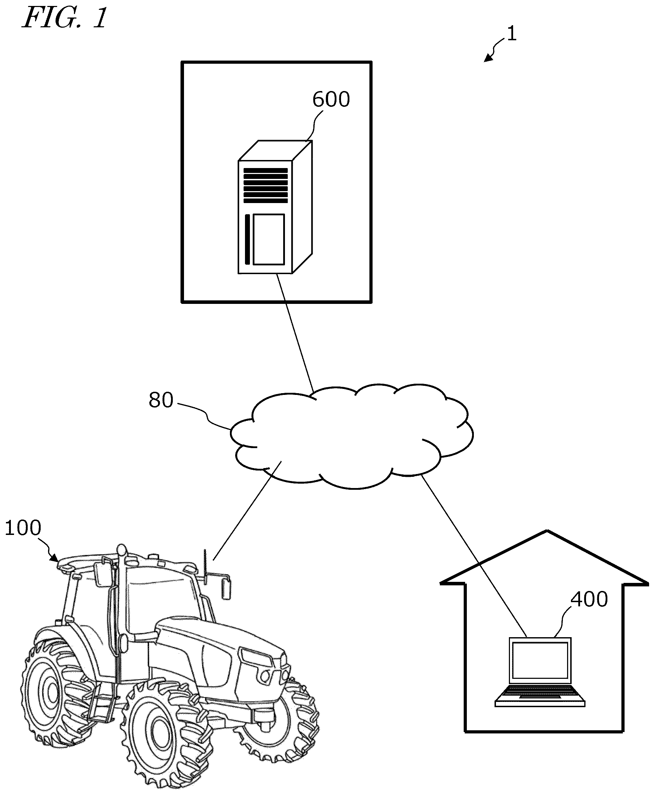

FIG. **1** is a diagram providing an overview of an agriculture management system **1** according to an illustrative embodiment of the present disclosure. The agriculture management system **1** shown in FIG. **1** includes a work vehicle **100,** a terminal device **400,** and a management device **600.** The terminal device **400** is a computer used by a user performing remote monitoring of the work vehicle **100.** The management device **600** is a computer managed by a business operator running the agriculture management system **1.** The work vehicle **100,** the terminal device **400** and the management device **600** can communicate with each other via the network **80.** FIG. **1** shows one work vehicle **100,** but the agriculture management system **1** may include a plurality of the work vehicles or any other agricultural machine.

The work vehicle **100** according to the present embodiment is a tractor. The work vehicle **100** can have an implement attached to its rear and/or its front. While performing agricultural work in accordance with the type of the implement, the work vehicle **100** is able to travel inside a field. The work vehicle **100** may travel inside the field or outside the field with no implement being attached thereto.

The work vehicle **100** has a self-driving function. In other words, the work vehicle **100** can travel by the action of a controller, rather than manually. The controller according to the present embodiment is provided inside the work vehicle **100,** and is able to control both the speed and steering of the work vehicle **100.** The work vehicle **100** can perform self-traveling outside the field (e.g., on roads) as well as inside the field.

The work vehicle **100** includes a device usable for positioning or localization, such as a GNSS receiver or an LiDAR sensor. Based on the position of the work vehicle **100** and information on a target path, the controller of the work vehicle **100** causes the work vehicle **100** to automatically travel. In addition to controlling the travel of the work vehicle **100,** the controller also controls the operation of the implement. As a result, while automatically traveling inside the field, the work vehicle **100** is able to perform agricultural work by using the implement. In addition, the work vehicle **100** is able to automatically travel along the target path on a road outside the field (e.g., an agricultural road or a general road). The work vehicle **100** travels in a self-traveling mode along roads outside the field with the effective use of data output from sensing devices, such as the cameras **120,** the obstacle sensors **130** and the LiDAR sensor **140.**

The management device **600** is a computer to manage the agricultural work performed by the work vehicle **100.** The management device **600** may be, for example, a server computer that performs centralized management on information regarding the field on the cloud and supports agriculture by use of the data on the cloud. The management device **600,** for example, creates a work plan for the work vehicle **100** and causes the work vehicle **100** to execute agricultural work in accordance with the work plan. The management device **600** generates a target path in the field based on, for example, the information entered by a user using the terminal unit **400** or any other device. The management device **600** may generate and edit an environment map based on data collected by the work vehicle **100** or any other movable body by use of the sensing device such as a LiDAR sensor. The management device **600** transmits data on the work plan, the target path and the environment map thus generated to the work vehicle **100.** The work vehicle **100** automatically moves and performs agricultural work based on the data.

The terminal device **400** is a computer that is used by a user who is at a remote place from the work vehicle **100.** The terminal device **400** shown in FIG. **1** is a laptop computer, but the terminal device **400** is not limited to this. The terminal device **400** may be a stationary computer such as a desktop PC (personal computer), or a mobile terminal such as a smartphone or a tablet computer. The terminal device **400** may be used to perform remote monitoring of the work vehicle **100** or remote-manipulate the work vehicle **100.** For example, the terminal device **400** can display, on a display screen thereof, a video captured by one or more cameras (imagers) included in the work vehicle **100.** The terminal device **400** can also display, on the display screen thereof, a setting screen allowing the user to input information necessary to create a work plan (e.g., a schedule of each task of agricultural work) for the work vehicle **100.** When the user inputs necessary information to the setting screen and performs a manipulation to transmit the information, the terminal device **400** transmits the input information to the management device **600.** The management device **600** creates a work plan based on the information. The terminal device **400** may further have a function of displaying, on a display screen thereof, a setting screen allowing the user to input information necessary to set a target path.

Hereinafter, a configuration and an operation of the system according to the present embodiment will be described in more detail.

### [1. Configuration]

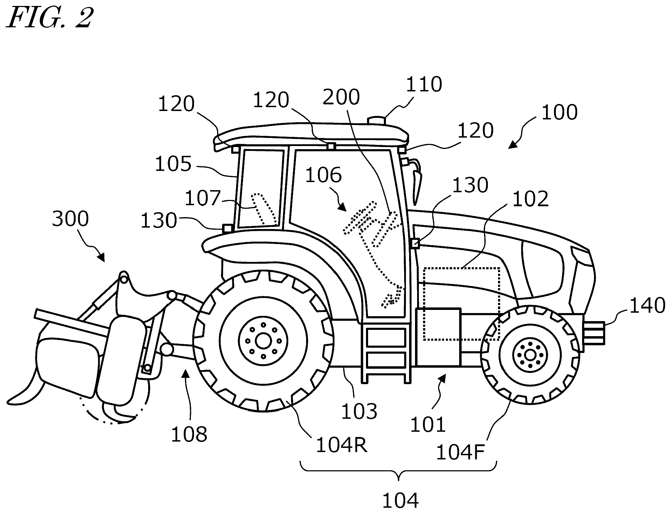

FIG. **2** is a side view schematically showing an example of the work vehicle **100** and an example of implement **300** linked to the work vehicle **100.** The work vehicle **100** according to the present embodiment can operate both in a manual driving mode and a self-driving mode. In the self-driving mode, the work vehicle **100** is able to perform unmanned travel. The work vehicle **100** can perform self-driving both inside a field and outside the field.

As shown in FIG. **2****,** the work vehicle **100** includes a vehicle body **101,** a prime mover (engine) **102,** and a transmission **103.** On the vehicle body **101,** wheels **104** with tires and a cabin **105** are provided. The wheels **104** include a pair of front wheels **104F** and a pair of rear wheels **104R.** Inside the cabin **105,** a driver's seat **107,** a steering device **106,** an operational terminal **200,** and switches for manipulation are provided. In the case where the work vehicle **100** performs tasked travel inside the field, either or both of the front wheels **104F** and the rear wheels **104R** may be a plurality of wheels (crawlers) with a continuous track rather than wheels with tires.

The work vehicle **100** can include at least one sensing device to sense the environment around the work vehicle **100** and a processing unit to process sensor data output from the at least one sensing device. In the example shown in FIG. **2****,** the work vehicle **100** includes a plurality of sensing devices. The sensing devices include a plurality of cameras **120,** a LiDAR sensor **140,** and a plurality of obstacle sensors **130.**

The cameras **120** may be provided at the front/rear/right/left of the work vehicle **100,** for example. The cameras **120** image the environment around the work vehicle **100** and generate image data. The images acquired by the cameras **120** can be output to a processing unit included in the work vehicle **100** and transmitted to the terminal device **400,** which is responsible for remote monitoring. Also, the images may be used to monitor the work vehicle **100** during unmanned driving. The cameras **120** may also be used to generate images to allow the work vehicle **100,** traveling on a road outside the field (an agricultural road or a general road), to recognize objects, obstacles, white lines, road signs, traffic signs or the like in the surroundings of the work vehicle **100.**

The LiDAR sensor **140** in the example shown in FIG. **2** is disposed on a bottom portion of a front surface of the vehicle body **101.** The LiDAR sensor **140** may be disposed at any other position. For example, the LiDAR sensor **140** may be provided at the upper portion of the cabin **105.** The LiDAR sensor **140** can be a 3D-LiDAR sensor but may be a 2D-LiDAR sensor. The LiDAR sensor **140** senses the environment around the work vehicle **100** to output sensor data. While the work vehicle **100** is traveling mainly outside the field, the LiDAR sensor **140** repeatedly outputs sensor data representing the distance and the direction between an object existing in the environment around the work vehicle **100** and each of measurement points, or three-dimensional or two-dimensional coordinate values of each of the measurement points. The sensor data output from the LiDAR sensor **140** is processed by the controller of the work vehicle **100.** The controller can perform localization of the work vehicle **100** by matching the sensor data against the environment map. The controller can further detect an object such as an obstacle existing in the surroundings of the work vehicle **100** based on the sensor data. The controller can utilize an algorithm such as, for example, SLAM (Simultaneous Localization and Mapping) to generate or edit an environment map. The work vehicle **100** may include a plurality of LiDAR sensors disposed at different positions with different orientations.

The plurality of obstacle sensors **130** shown in FIG. **2** are provided at the front and the rear of the cabin **105.** The obstacle sensors **130** may be disposed at other positions. For example, one or more obstacle sensors **130** may be disposed at any position at the sides, the front or the rear of the vehicle body **101.** The obstacle sensors **130** may include, for example, a laser scanner or an ultrasonic sonar. The obstacle sensors **130** may be used to detect obstacles around the work vehicle **100** during self-traveling to cause the work vehicle **100** to halt or detour around the obstacles. The LiDAR sensor **140** may be used as one of the obstacle sensors **130.**

The work vehicle **100** further includes a GNSS unit **110.** The GNSS unit **110** includes a GNSS receiver. The GNSS receiver may include an antenna to receive a signal(s) from a GNSS satellite(s) and a processor to calculate the position of the work vehicle **100** based on the signal(s) received by the antenna. The GNSS unit **110** receives satellite signals transmitted from the plurality of GNSS satellites, and performs positioning based on the satellite signals. GNSS is the general term for satellite positioning systems such as GPS (Global Positioning System), QZSS (Quasi-Zenith Satellite System; e.g., MICHIBIKI), GLONASS, Galileo, and BeiDou. Although the GNSS unit **110** according to the present embodiment is disposed above the cabin **105,** it may be disposed at any other position.

The GNSS unit **110** may include an inertial measurement unit (IMU). Signals from the IMU can be used to complement position data. The IMU can measure a tilt or a small motion of the work vehicle **100.** The data acquired by the IMU can be used to complement the position data based on the satellite signals, so as to improve the performance of positioning.

The controller of the work vehicle **100** may utilize, for positioning, the sensor data acquired by the sensing devices such as the cameras **120** and/or the LIDAR sensor **140,** in addition to the positioning results provided by the GNSS unit **110.** In the case where objects serving as characteristic points exist in the environment that is traveled by the work vehicle **100,** as in the case of an agricultural road, a forest road, a general road or an orchard, the position and the orientation of the work vehicle **100** can be estimated with a high accuracy based on data that is acquired by the cameras **120** and/or the LiDAR sensor **140** and on an environment map that is previously stored in the storage device. By correcting or complementing position data based on the satellite signals using the data acquired by the cameras **120** and/or the LiDAR sensor **140,** it becomes possible to identify the position of the work vehicle **100** with a higher accuracy.

The prime mover **102** may be a diesel engine, for example. Instead of a diesel engine, an electric motor may be used. The transmission **103** can change the propulsion and the moving speed of the work vehicle **100** through a speed changing mechanism. The transmission **103** can also switch between forward travel and backward travel of the work vehicle **100.**

The steering device **106** includes a steering wheel, a steering shaft connected to the steering wheel, and a power steering device to assist in the steering by the steering wheel. The front wheels **104F** are the steered wheels, such that changing their angle of turn (also referred to as "steering angle") can cause a change in the traveling direction of the work vehicle **100.** The steering angle of the front wheels **104F** can be changed by manipulating the steering wheel. The power steering device includes a hydraulic device or an electric motor to supply an assisting force to change the steering angle of the front wheels **104F.** When automatic steering is performed, under the control of the controller disposed in the work vehicle **100,** the steering angle may be automatically adjusted by the power of the hydraulic device or the electric motor.

A linkage device **108** is provided at the rear of the vehicle body **101.** The linkage device **108** includes, e.g., a three-point linkage (also referred to as a "three-point link" or a "three-point hitch"), a PTO (Power Take Off) shaft, a universal joint, and a communication cable. The linkage device **108** allows the implement **300** to be attached to, or detached from, the work vehicle **100.** The linkage device **108** is able to raise or lower the three-point link with a hydraulic device, for example, thus changing the position and/or attitude of the implement **300.** Moreover, motive power can be sent from the work vehicle **100** to the implement **300** via the universal joint. While towing the implement **300,** the work vehicle **100** allows the implement **300** to perform a predetermined task. The linkage device may be provided at the front portion of the vehicle body **101.** In that case, the implement **300** can be connected with the front portion of the work vehicle **100.**

Although the implement **300** shown in FIG. **2** is a rotary tiller, the implement **300** is not limited to a rotary tiller. For example, any arbitrary implement such as a seeder, a spreader, a transplanter, a mower, a rake implement, a baler, a harvester, a sprayer, or a harrow, can be connected to the work vehicle **100** for use.

The work vehicle **100** shown in FIG. **2** can be driven by human driving; alternatively, it may only support unmanned driving. In that case, component elements which are only required for human driving, e.g., the cabin **105,** the steering device **106,** and the driver's seat **107** do not need to be provided in the work vehicle **100.** An unmanned work vehicle **100** can travel via autonomous driving, or by remote operation by a user.

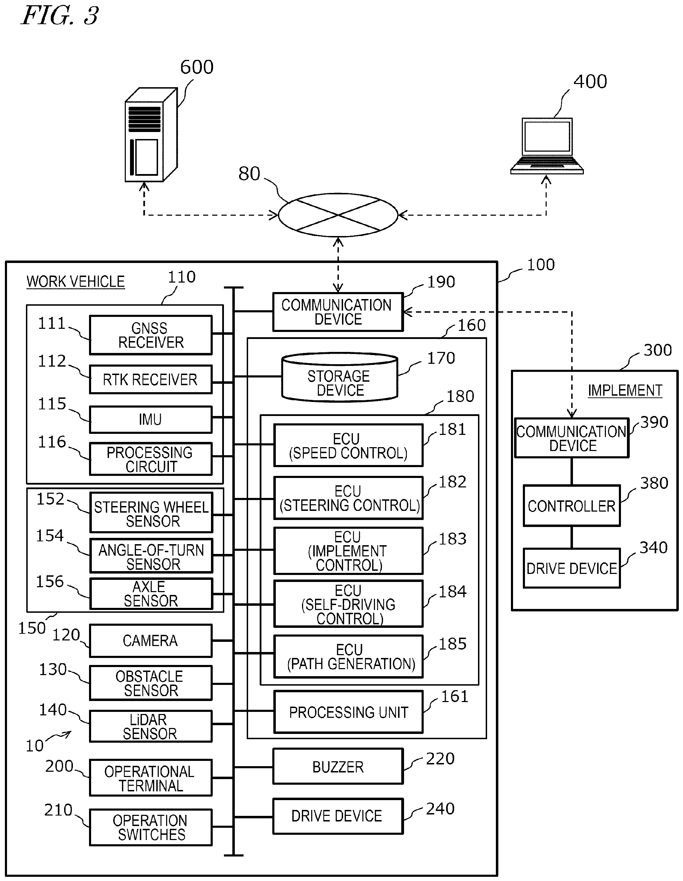

FIG. **3** is a block diagram showing an example configuration of the work vehicle **100** and the implement **300.** The work vehicle **100** and the implement **300** can communicate with each other via a communication cable that is included in the linkage device **108.** The work vehicle **100** is able to communicate with the terminal device **400** and the management device **600** via the network **80.**

In addition to the GNSS unit **110,** the cameras **120,** the obstacle sensors **130,** the LiDAR sensor **140** and the operational terminal **200,** the work vehicle **100** in the example of FIG. **3** includes sensors **150** to detect the operating status of the work vehicle **100,** a control system **160,** a communication device **190,** operation switches **210,** a buzzer **220,** and a drive device **240.** These component elements are communicably connected to each other via a bus. The GNSS unit **110** includes a GNSS receiver **111,** an RTK receiver **112,** an inertial measurement unit (IMU) **115,** and a processing circuit **116.** The sensors **150** include a steering wheel sensor **152,** an angle-of-turn sensor **154,** and an axle sensor **156.** The control system **160** includes a processing unit **161,** a storage device **170** and a controller **180.** The controller **180** includes a plurality of electronic control units (ECU) **181 to 185.** The implement **300** includes a drive device **340,** a controller **380,** and a communication device **390.** Note that FIG. **3** shows component elements which are relatively closely related to the operations of self-driving by the work vehicle **100,** while other components are omitted from illustration.

The GNSS receiver **111** in the GNSS unit **110** receives satellite signals transmitted from the plurality of GNSS satellites and generates GNSS data based on the satellite signals. The GNSS data is generated in a predetermined format such as, for example, the NMEA-0183 format. The GNSS data may include, for example, the identification number, the angle of elevation, the azimuth angle, and a value representing the reception strength of each of the satellites from which the satellite signals are received.

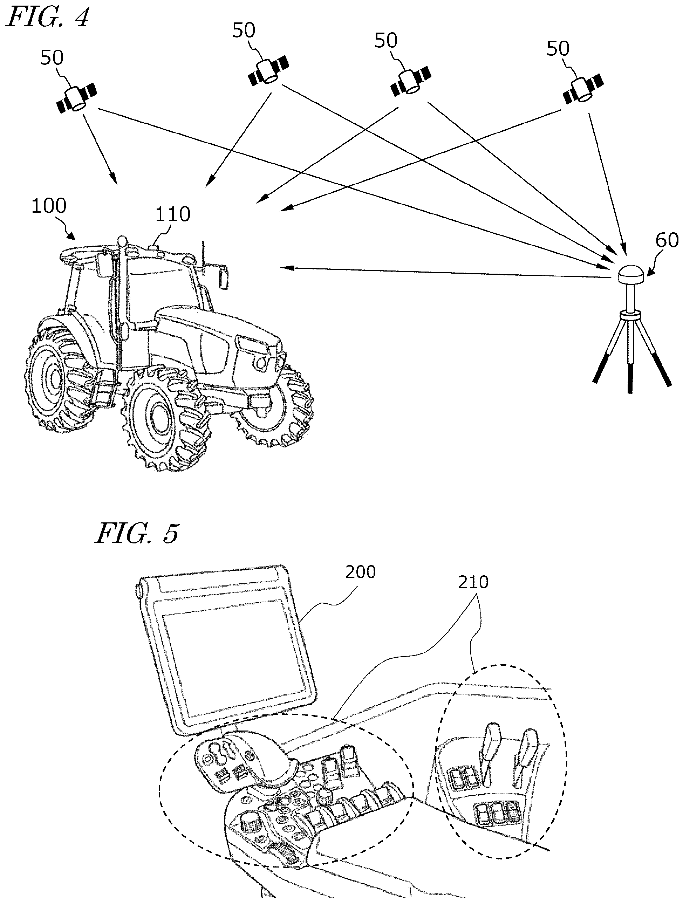

The GNSS unit **110** shown in FIG. **3** performs positioning of the work vehicle **100** by utilizing an RTK (Real Time Kinematic)-GNSS. FIG. **4** is a conceptual diagram showing an example of the work vehicle **100** performing positioning based on the RTK-GNSS. In the positioning based on the RTK-GNSS, not only satellite signals transmitted from a plurality of GNSS satellites **50,** but also a correction signal that is transmitted from a reference station **60** is used. The reference station **60** may be disposed near the field where the work vehicle **100** performs tasked travel (e.g., at a position within 10 km of the work vehicle **100).** The reference station **60** generates a correction signal of, for example, an RTCM format based on the satellite signals received from the plurality of GNSS satellites **50,** and transmits the correction signal to the GNSS unit **110.** The RTK receiver **112,** which includes an antenna and a modem, receives the correction signal transmitted from the reference station **60.** Based on the correction signal, the processing circuit **116** of the GNSS unit **110** corrects the results of the positioning performed by use of the GNSS receiver **111.** Use of the RTK-GNSS enables positioning with an accuracy on the order of several centimeters of errors, for example. Positional data including latitude, longitude, and altitude information is acquired through the highly accurate positioning by the RTK-GNSS. The GNSS unit **110** calculates the position of the work vehicle **100** as frequently as, for example, one to ten times per second.

Note that the positioning method is not limited to being performed by use of an RTK-GNSS; any arbitrary positioning method (e.g., an interferometric positioning method or a relative positioning method) that provides positional data with the necessary accuracy can be used. For example, positioning may be performed by utilizing a VRS (Virtual Reference Station) or a DGPS (Differential Global Positioning System). In the case where positional data with the necessary accuracy can be obtained without the use of the correction signal transmitted from the reference station **60,** positional data may be generated without using the correction signal. In that case, the GNSS unit **110** does not need to include the RTK receiver **112.**

Even in the case where the RTK-GNSS is used, at a site where the correction signal from the reference station **60** cannot be acquired (e.g., on a road far from the field), the position of the work vehicle **100** is estimated by another method with no use of the signal from the RTK receiver **112.** For example, the position of the work vehicle **100** may be estimated by matching the data output from the LiDAR sensor **140** and/or the cameras **120** against a highly accurate environment map.

The GNSS unit **110** according to the present embodiment further includes the IMU **115.** The IMU **115** may include a 3-axis accelerometer and a 3-axis gyroscope. The IMU **115** may include a direction sensor such as a 3-axis geomagnetic sensor. The IMU **115** functions as a motion sensor which can output signals representing parameters such as acceleration, velocity, displacement, and attitude of the work vehicle **100.** Based not only on the satellite signals and the correction signal but also on a signal that is output from the IMU **115,** the processing circuit **116** can estimate the position and orientation of the work vehicle **100** with a higher accuracy. The signal that is output from the IMU **115** may be used for the correction or complementation of the position that is calculated based on the satellite signals and the correction signal. The IMU **115** outputs a signal more frequently than the GNSS receiver **111.** Utilizing this signal that is output highly frequently, the processing circuit **116** allows the position and orientation of the work vehicle **100** to be measured more frequently (e.g., about 10 Hz or above). Instead of the IMU **115,** a 3-axis accelerometer and a 3-axis gyroscope may be separately provided. The IMU **115** may be provided as a separate device from the GNSS unit **110.**

The cameras **120** are imagers that image the environment around the work vehicle **100.** Each of the cameras **120** includes an image sensor such as a CCD (Charge Coupled Device) or a CMOS (Complementary Metal Oxide Semiconductor), for example. In addition, each camera **120** may include an optical system including one or more lenses and a signal processing circuit. During travel of the work vehicle **100,** the cameras **120** image the environment around the work vehicle **100,** and generate image data (e.g., motion picture data). The cameras **120** are able to capture motion pictures at a frame rate of 3 frames/second (fps: frames per second) or greater, for example. The images generated by the cameras **120** may be used by a remote supervisor to check the environment around the work vehicle **100** with the terminal device **400,** for example. The images generated by the cameras **120** may also be used for the purpose of positioning and/or detection of obstacles. As shown in FIG. **2****,** the plurality of cameras **120** may be provided at different positions on the work vehicle **100,** or a single camera **120** may be provided. A visible camera(s) to generate visible light images and an infrared camera(s) to generate infrared images may be separately provided. Both of a visible camera(s) and an infrared camera(s) may be provided as cameras for generating images for monitoring purposes. The infrared camera(s) may also be used for detection of obstacles at nighttime.

The obstacle sensors **130** detect objects existing around the work vehicle **100.** Each of the obstacle sensors **130** may include a laser scanner or an ultrasonic sonar, for example. When an object exists at a position within a predetermined distance from one of the obstacle sensors **130,** the obstacle sensor **130** outputs a signal indicating the presence of the obstacle. The plurality of obstacle sensors **130** may be provided at different positions on the work vehicle **100.** For example, a plurality of laser scanners and a plurality of ultrasonic sonars may be disposed at different positions on the work vehicle **100.** Providing such a great number of obstacle sensors **130** can reduce blind spots in monitoring obstacles around the work vehicle **100.**

The steering wheel sensor **152** measures the angle of rotation of the steering wheel of the work vehicle **100.** The angle-of-turn sensor **154** measures the angle of turn of the front wheels **104F,** which are the steered wheels. Measurement values by the steering wheel sensor **152** and the angle-of-turn sensor **154** are used for steering control by the controller **180.**

The axle sensor **156** measures the rotational speed, i.e., the number of revolutions per unit time, of an axle that is connected to the wheels **104.** The axle sensor **156** may be a sensor including a magnetoresistive element (MR), a Hall generator, or an electromagnetic pickup, for example. The axle sensor **156** outputs a numerical value indicating the number of revolutions per minute (unit: rpm) of the axle, for example. The axle sensor **156** is used to measure the speed of the work vehicle **100.**

The drive device **240** includes various types of devices required to cause the work vehicle **100** to travel and to drive the implement **300;** for example, the prime mover **102,** the transmission **103,** the steering device **106,** the linkage device **108** and the like described above. The prime mover **102** may include an internal combustion engine such as, for example, a diesel engine. The drive device **240** may include an electric motor for traction instead of, or in addition to, the internal combustion engine.

The buzzer **220** is an audio output device to present an alarm sound to alert the user of an abnormality. For example, the buzzer **220** may present an alarm sound when an obstacle is detected during self-driving. The buzzer **220** is controlled by the controller **180.**

The processing unit **161** may be a microprocessor or a microcontroller. The processing unit **161** processes sensor data output from sensing devices, such as the cameras **120,** the obstacle sensors **130** and the LiDAR sensor **140.** For example, the processing unit **161** detects objects around the work vehicle **100** based on data output from the cameras **120,** the obstacle sensors **130** and the LiDAR sensor **140.**

The storage device **170** includes one or more storage mediums such as a flash memory or a magnetic disc. The storage device **170** stores various data that is generated by the GNSS unit **110,** the cameras **120,** the obstacle sensors **130,** the LiDAR sensor **140,** the sensors **150,** and the controller **180.** The data that is stored by the storage device **170** may include map data on the environment where the work vehicle **100** travels (environment map) and data on a target path for self-driving. The environment map includes information on a plurality of fields where the work vehicle **100** performs agricultural work and roads around the fields. The environment map and the target path may be generated by a processor in the management device **600.** The controller **180** may have a function of generating or editing an environment map and a target path. The controller **180** can edit the environment map and the target path, acquired from the management device **600,** in accordance with the environment where the work vehicle **100** travels. The storage device **170** also stores data on a work plan received by the communication device **190** from the management device **600.**

The storage device **170** also stores a computer program(s) to cause the processing unit **161** and each of the ECUs in the controller **180** to perform various operations described below. Such a computer program(s) may be provided to the work vehicle **100** via a storage medium (e.g., a semiconductor memory, an optical disc, etc.) or through telecommunication lines (e.g., the Internet). Such a computer program(s) may be marketed as commercial software.

The controller **180** includes the plurality of ECUs. The plurality of ECUs include, for example, the ECU **181** for speed control, the ECU **182** for steering control, the ECU **183** for implement control, the ECU **184** for self-driving control, and the ECU **185** for path generation.

The ECU **181** controls the prime mover **102,** the transmission **103** and brakes included in the drive device **240,** thus controlling the speed of the work vehicle **100.**

The ECU **182** controls the hydraulic device or the electric motor included in the steering device **106** based on a measurement value of the steering wheel sensor **152,** thus controlling the steering of the work vehicle **100.**

In order to cause the implement **300** to perform a desired operation, the ECU **183** controls the operations of the three-point link, the PTO shaft and the like that are included in the linkage device **108.** Also, the ECU **183** generates a signal to control the operation of the implement **300,** and transmits this signal from the communication device **190** to the implement **300.**

Based on data output from the GNSS unit **110,** the cameras **120,** the obstacle sensors **130,** the LiDAR sensor **140,** the sensors **150** and the processing unit **161,** the ECU **184** performs computation and control for achieving self-driving. For example, the ECU **184** specifies the position of the work vehicle **100** based on the data output from at least one of the GNSS unit **110,** the cameras **120** and the LiDAR sensor **140.** Inside the field, the ECU **184** may determine the position of the work vehicle **100** based only on the data output from the GNSS unit **110.** The ECU **184** may estimate or correct the position of the work vehicle **100** based on the data acquired by the cameras **120** and/or the LiDAR sensor **140.** Use of the data acquired by the cameras **120** and/or the LiDAR sensor **140** allows the accuracy of the positioning to be further improved. Outside the field, the ECU **184** estimates the position of the work vehicle **100** by use of the data output from the LiDAR sensor **140** and/or the cameras **120.** For example, the ECU **184** may estimate the position of the work vehicle **100** by matching the data output from the LiDAR sensor **140** and/or the cameras **120** against the environment map. During self-driving, the ECU **184** performs computation necessary for the work vehicle **100** to travel along a target path, based on the estimated position of the work vehicle **100.** The ECU **184** sends the ECU **181** a command to change the speed, and sends the ECU **182** a command to change the steering angle. In response to the command to change the speed, the ECU **181** controls the prime mover **102,** the transmission **103** or the brakes to change the speed of the work vehicle **100.** In response to the command to change the steering angle, the ECU **182** controls the steering device **106** to change the steering angle.

The ECU **185** can determine a destination of the work vehicle **100** based on the work plan stored in the storage device **170,** and determine a target path from a beginning point to a target point of the movement of the work vehicle **100.** The ECU **185** may perform the process of detecting objects around the work vehicle **100** based on the data output from the cameras **120,** the obstacle sensors **130** and the LiDAR sensor **140.**

Through the actions of these ECUs, the controller **180** realizes self-driving. During self-driving, the controller **180** controls the drive device **240** based on the measured or estimated position of the work vehicle **100** and on the target path. As a result, the controller **180** can cause the work vehicle **100** to travel along the target path.

The plurality of ECUs included in the controller **180** can communicate with each other in accordance with a vehicle bus standard such as, for example, a CAN (Controller Area Network). Instead of the CAN, faster communication methods such as Automotive Ethernet (registered trademark) may be used. Although the ECUs **181** to **185** are illustrated as individual blocks in FIG. **3****,** the function of each of the ECU **181** to **185** may be implemented by a plurality of ECUs. Alternatively, an onboard computer that integrates the functions of at least some of the ECUs **181 to 185** may be provided. The controller **180** may include ECUs other than the ECUs **181 to 185,** and any number of ECUs may be provided in accordance with functionality. Each ECU includes a processing circuit including one or more processors. The controller **180** may include the processing unit **161.** The processing unit **161** may be integrated with any of the ECUs included in the controller **180.**

The communication device **190** is a device including a circuit communicating with the implement **300,** the terminal device **400** and the management device **600.** The communication device **190** includes circuitry to perform exchanges of signals complying with an ISOBUS standard such as ISOBUS-TIM, for example, between itself and the communication device **390** of the implement **300.** This allows the implement **300** to perform a desired operation, or allows information to be acquired from the implement **300.** The communication device **190** may further include an antenna and a communication circuit to exchange signals via the network **80** with communication devices of the terminal device **400** and the management device **600.** The network **80** may include a 3G, 4G, 5G, or any other cellular mobile communications network and the Internet, for example. The communication device **190** may have a function of communicating with a mobile terminal that is used by a supervisor who is situated near the work vehicle **100.** With such a mobile terminal, communication may be performed based on any arbitrary wireless communication standard, e.g., Wi-Fi (registered trademark), 3G, 4G, 5G or any other cellular mobile communication standard, or Bluetooth (registered trademark).

The operational terminal **200** is a terminal for the user to perform a manipulation related to the travel of the work vehicle **100** and the operation of the implement **300,** and is also referred to as a virtual terminal (VT). The operational terminal **200** may include a display device such as a touch screen panel, and/or one or more buttons. The display device may be a display such as a liquid crystal display or an organic light-emitting diode (OLED) display, for example. By manipulating the operational terminal **200,** the user can perform various manipulations, such as, for example, switching ON/OFF the self-driving mode, recording or editing an environment map, setting a target path, and switching ON/OFF the implement **300.** At least a portion of these manipulations may also be realized by manipulating the operation switches **210.** The operational terminal **200** may be configured so as to be detachable from the work vehicle **100.** A user who is at a remote place from the work vehicle **100** may manipulate the detached operational terminal **200** to control the operation of the work vehicle **100.** Instead of the operational terminal **200,** the user may manipulate a computer on which necessary application software is installed, for example, the terminal device **400,** to control the operation of the work vehicle **100.**

FIG. 5 is a diagram showing an example of the operational terminal **200** and an example of the operation switches **210** both provided in the cabin **105.** In the cabin **105,** the operation switches **210,** including a plurality of switches that are manipulable to the user, are disposed. The operation switches **210** may include, for example, a switch to select the gear shift as to a main gear shift or a range gear shift, a switch to switch between a self-driving mode and a manual driving mode, a switch to switch between forward travel and backward travel, a switch to raise or lower the implement **300,** and the like. In the case where the work vehicle **100** only performs unmanned driving and lacks human driving functionality, the work vehicle **100** does not need to include the operation switches **210.**

The drive device **340** in the implement **300** shown in FIG. 3 performs operations necessary for the implement **300** to perform predetermined work. The drive device **340** includes a device suitable for uses of the implement **300,** for example, a hydraulic device, an electric motor, a pump or the like. The controller **380** controls the operation of the drive device **340.** In response to a signal that is transmitted from the work vehicle **100** via the communication device **390,** the controller **380** causes the drive device **340** to perform various operations. Moreover, a signal that is in accordance with the state of the implement **300** can be transmitted from the communication device **390** to the work vehicle **100.**

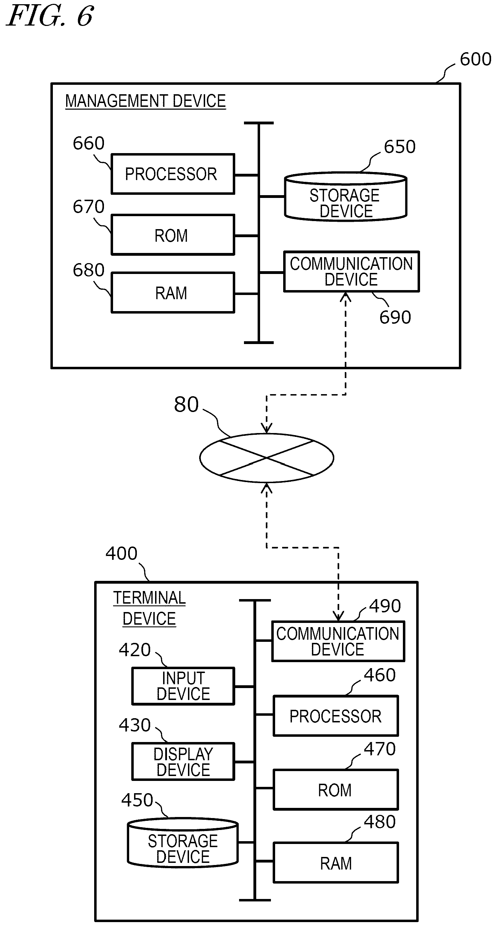

Now, a configuration of the management device **600** and the terminal device **400** will be described with reference to FIG. **6.** FIG. 6 is a block diagram showing an example of schematic hardware configuration of the management device **600** and the terminal device **400.**

The management device **600** includes a storage device **650,** a processor **660,** a ROM (Read Only Memory) **670,** a RAM (Random Access Memory) **680,** and a communication device **690.** These component elements are communicably connected to each other via a bus. The management device **600** may function as a cloud server to manage the schedule of the agricultural work to be performed by the work vehicle **100** in a field and support agriculture by use of the data managed by the management device **600** itself. The user can input information necessary to create a work plan by use of the terminal device **400** and upload the information to the management device **600** via the network **80.** The management device **600** can create a schedule of agricultural work, that is, a work plan based on the information. The management device **600** can further generate or edit an environment map. The environment map may be distributed from a computer external to the management device **600.**

The communication device **690** is a communication module to communicate with the work vehicle **100** and the terminal device **400** via the network **80.** The communication device **690** can perform wired communication in compliance with communication standards such as, for example, IEEE1394 (registered trademark) or Ethernet (registered trademark). The communication device **690** may perform wireless communication in compliance with Bluetooth (registered trademark) or Wi-Fi, or cellular mobile communication based on 3G, 4G, 5G or any other cellular mobile communication standard.

The processor **660** may be, for example, a semiconductor integrated circuit including a central processing unit (CPU). The processor **660** may be realized by a microprocessor or a microcontroller. Alternatively, the processor **660** may be realized by an FPGA (Field Programmable Gate Array), a GPU (Graphics Processing Unit), an ASIC (Application Specific Integrated Circuit) or an ASSP (Application Specific Standard Product) each including a CPU, or a combination of two or more selected from these circuits. The processor **660** consecutively executes a computer program, describing commands to execute at least one process, stored in the ROM **670** and thus realizes a desired process.

The ROM **670** is, for example, a writable memory (e.g., PROM), a rewritable memory (e.g., flash memory) or a memory which can only be read from but cannot be written to. The ROM **670** stores a program to control operations of the processor **660.** The ROM **670** does not need to be a single storage medium, and may be an assembly of a plurality of storage mediums. A portion of the assembly of the plurality of storage memories may be a detachable memory.

The RAM **680** provides a work area in which the control program stored in the ROM **670** is once developed at the time of boot. The RAM **680** does not need to be a single storage medium, and may be an assembly of a plurality of storage mediums.

The storage device **650** mainly functions as a storage for a database. The storage device **650** may be, for example, a magnetic storage device or a semiconductor storage device. An example of the magnetic storage device is a hard disc drive (HDD). An example of the semiconductor storage device is a solid state drive (SSD). The storage device **650** may be a device independent from the management device **600.** For example, the storage device **650** may be a storage device connected to the management device **600** via the network **80,** for example, a cloud storage.

The terminal device **400** includes an input device **420,** a display device **430,** a storage device **450,** a processor **460,** a ROM **470,** a RAM **480,** and a communication device **490.** These component elements are communicably connected to each other via a bus. The input device **420** is a device to convert an instruction from the user into data and input the data to a computer. The input device **420** may be, for example, a keyboard, a mouse or a touch panel. The display device **430** may be, for example, a liquid crystal display or an organic EL display. The processor **460,** the ROM **470,** the RAM **480,** the storage device **450** and the communication device **490** are substantially the same as the corresponding component elements described above regarding the example of the hardware configuration of the management device **600,** and will not be described in repetition.

### [2. Operation]

Now, an operation of the work vehicle **100,** the terminal device **400** and the management device **600** will be described.

### [2-1. Self-traveling operation]

First, an example operation of self-traveling of the work vehicle **100** will be described. The work vehicle **100** according to the present embodiment can automatically travel both inside and outside a field. Inside the field, the work vehicle **100** drives the implement **300** to perform predetermined agricultural work while traveling along a preset target path. When detecting an obstacle while traveling inside the field, the work vehicle **100** halts traveling and performs operations of presenting an alarm sound from the buzzer **220,** transmitting an alert signal to the terminal device **400** and the like. Inside the field, the positioning of the work vehicle **100** is performed based mainly on data output from the GNSS unit **110.** Meanwhile, outside the field, the work vehicle **100** automatically travels along a target path set for an agricultural road or a general road outside the field. While traveling outside the field, the work vehicle **100** travels with the effective use of data acquired by the cameras **120** and/or the LiDAR sensor **140.** When an obstacle is detected outside the field, the work vehicle **100** avoids the obstacle or halts at the point. Outside the field, the position of the work vehicle **100** is estimated based on data output from the LiDAR sensor **140** and/or the cameras **120** in addition to positioning data output from the GNSS unit **110.**

Hereinafter, an example of the operation performed when the work vehicle **100** performs self-traveling in the field is described.

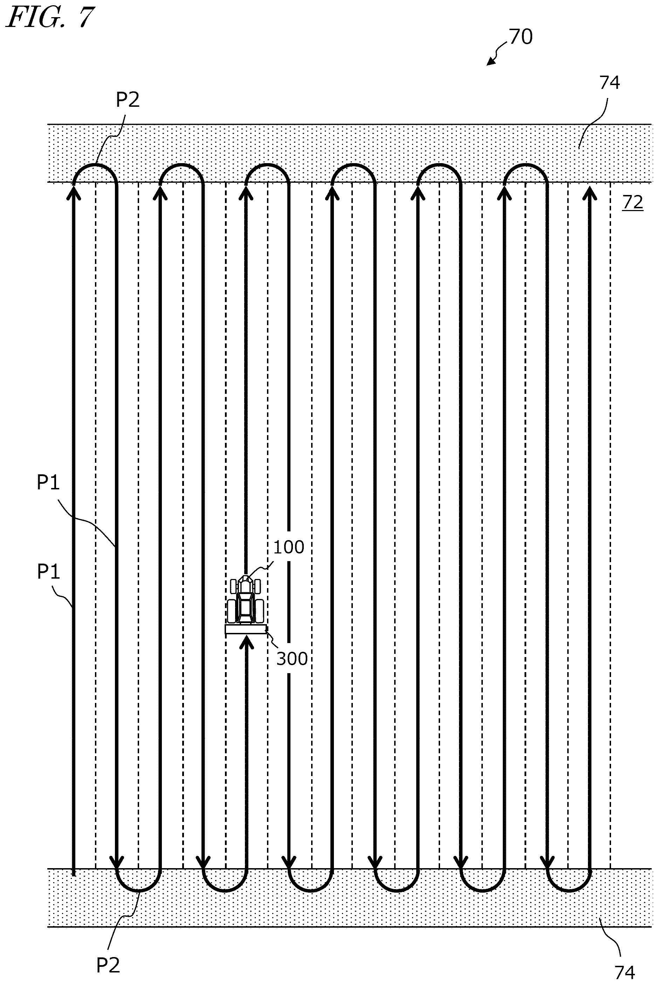

FIG. 7 is a diagram schematically showing an example of the work vehicle **100** automatically traveling along a target path in a field. In this example, the field **70** includes a work area **72,** in which the work vehicle **100** performs work by using the implement **300,** and headlands **74,** which are located near outer edges of the field **70.** The user may previously specify which regions of the field **70** on the map would correspond to the work area **72** and the headlands **74.** The target path in this example includes a plurality of main paths **P1** parallel to each other and a plurality of turning paths **P2** interconnecting the plurality of main paths **P1.** The main paths **P1** are located in the work area **72,** whereas the turning paths **P2** are located in the headlands **74.** Although each of the main paths **P1** in FIG. 7 is illustrated as a linear path, each main path **P1** may also include a curved portion(s). Broken lines in FIG. 7 depict the working breadth of the implement **300.** The working breadth is previously set and recorded in the storage device **170.** The working breadth may be set and recorded by the user manipulating the operational terminal **200** or the terminal device **400.** Alternatively, the working breadth may be automatically recognized and recorded when the implement **300** is connected to the work vehicle **100.** The interval between the plurality of main paths **P1** may be set so as to be matched to the working breadth. The target path may be generated based on the manipulation made by the user, before self-driving is begun. The target path may be generated so as to cover the entire work area **72** in the field **70,** for example. Along the target path shown in FIG. **7****,** the work vehicle **100** automatically travels while repeating a reciprocating motion from a beginning point of work to an ending point of work. Note that the target path shown in FIG. **7** is merely an example, and the target path may be arbitrarily determined.

Now, an example control by the controller **180** during self-driving inside the field will be described.

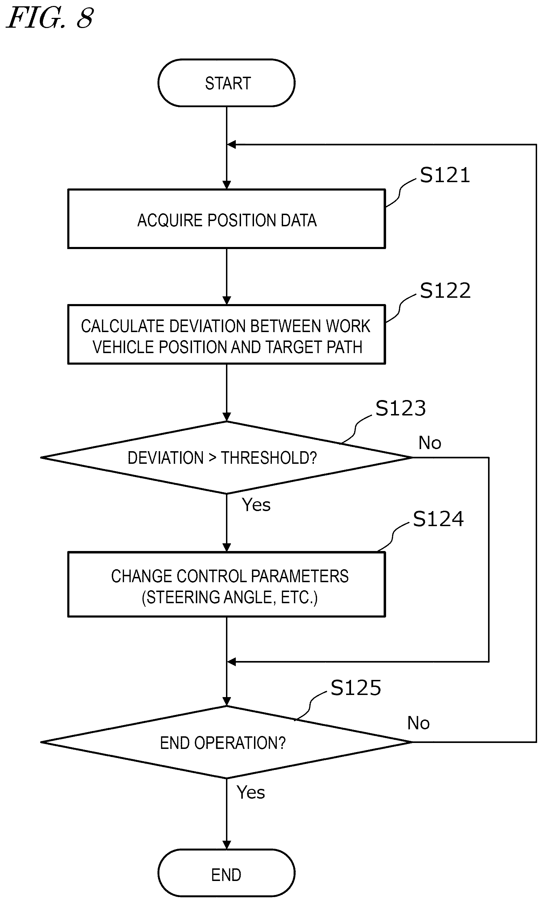

FIG. **8** is a flowchart showing an example operation of steering control to be performed by the controller **180** during self-driving. During travel of the work vehicle **100,** the controller **180** performs automatic steering by performing the operation from steps **S121** to **S125** shown in FIG. **8****.** The speed of the work vehicle **100** will be maintained at a previously-set speed, for example. First, during travel of the work vehicle **100,** the controller **180** acquires data representing the position of the work vehicle **100** that is generated by the GNSS unit **110** (step **S121).** Next, the controller **180** calculates a deviation between the position of the work vehicle **100** and the target path (step **S122).** The deviation represents the distance between the position of the work vehicle **100** and the target path at that moment. The controller **180** determines whether the calculated deviation in position exceeds the previously-set threshold or not (step **S123).** If the deviation exceeds the threshold, the controller **180** changes a control parameter of the steering device included in the drive device **240** so as to reduce the deviation, thus changing the steering angle (step **S124).** If the deviation does not exceed the threshold at step **S123,** the operation of step **S124** is omitted. At the following step **S125,** the controller **180** determines whether a command to end the operation has been received or not. The command to end the operation may be given when the user has instructed that self-driving be suspended through remote operations, or when the work vehicle **100** has arrived at the destination, for example. If the command to end the operation has not been given, the control returns to step **S121** and the controller **180** performs substantially the same operation based on a newly measured position of the work vehicle **100.** The controller **180** repeats the operation from steps **S121** to **S125** until a command to end the operation is given. The aforementioned operation is executed by the ECUs **182** and **184** in the controller **180.**

In the example shown in FIG. **8****,** the controller **180** controls the drive device **240** based only on the deviation between the position of the work vehicle **100** as identified by the GNSS unit **110** and the target path. Alternatively, a deviation in terms of directions may further be considered in the control. For example, when a directional deviation exceeds a previously-set threshold, where the directional deviation is an angle difference between the orientation of the work vehicle **100** as identified by the GNSS unit **110** and the direction of the target path, the controller **180** may change the control parameter of the steering device of the drive device **240** (e.g., steering angle) in accordance with the deviation.

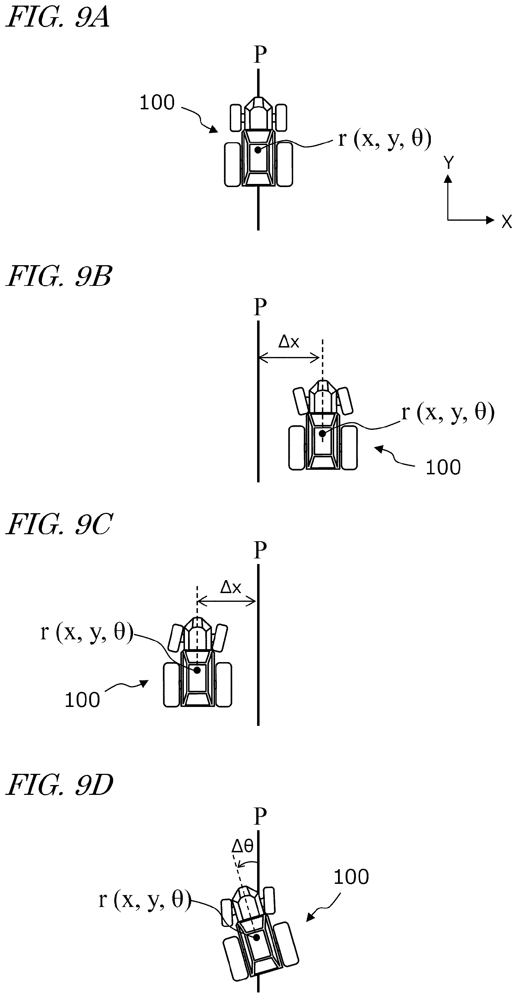

Hereinafter, with reference to FIGS. **9A** to **9D****,** an example of steering control by the controller **180** will be described more specifically.

FIG. **9A** is a diagram showing an example of the work vehicle **100** traveling along a target path **P.** FIG. **9B** is a diagram showing an example of the work vehicle **100** at a position which is shifted rightward from the target path **P.** FIG. **9C** is a diagram showing an example of the work vehicle **100** at a position which is shifted leftward from the target path **P.** FIG. **9D** is a diagram showing an example of the work vehicle **100** oriented in an inclined direction with respect to the target path **P.** In these figures, the pose, i.e., the position and orientation, of the work vehicle **100** as measured by the GNSS unit **110** is expressed as r(x,y,θ). Herein, (x,y) are coordinates representing the position of a reference point on the work vehicle **100** in an XY coordinate system, which is a two-dimensional coordinate system fixed to the globe. In the examples shown in FIGS. **9A** to **9D****,** the reference point on the work vehicle **100** is at a position, on the cabin, where a GNSS antenna is disposed, but the reference point may be at any arbitrary position. θ is an angle representing the measured orientation of the work vehicle **100.** Although the target path **P** is shown parallel to the Y axis in the examples illustrated in these figures, the target path **P** may not necessarily be parallel to the Y axis, in general.

As shown in FIG. **9A****,** in the case where the position and orientation of the work vehicle **100** are not deviated from the target path **P,** the controller **180** maintains the steering angle and speed of the work vehicle **100** without changing them.

As shown in FIG. **9B****,** when the position of the work vehicle **100** is shifted rightward from the target path **P,** the controller **180** changes the steering angle so that the traveling direction of the work vehicle **100** will be inclined leftward, thus bringing the work vehicle **100** closer to the path **P.** At this point, not only the steering angle but also the speed may be changed. The magnitude of the steering angle may be adjusted in accordance with the magnitude of a positional deviation Δx, for example.

As shown in FIG. **9C****,** when the position of the work vehicle **100** is shifted leftward from the target path **P,** the controller **180** changes the steering angle so that the traveling direction of the work vehicle **100** will be inclined rightward, thus bringing the work vehicle **100** closer to the path **P.** In this case, too, not only the steering angle but also the speed may be changed. The amount of change of the steering angle may be adjusted in accordance with the magnitude of the positional deviation Δx, for example.

As shown in FIG. **9D****,** in the case where the position of the work vehicle **100** is not considerably deviated from the target path **P** but its orientation is nonetheless different from the direction of the target path **P,** the controller **180** changes the steering angle so that the directional deviation Δθ will become smaller. In this case, too, not only the steering angle but also the speed may be changed. The magnitude of the steering angle may be adjusted in accordance with the magnitudes of the positional deviation Δx and the directional deviation Δθ, for example. For instance, the amount of change of the steering angle (which is in accordance with the directional deviation Δθ) may be increased as the absolute value of the positional deviation Δx decreases. When the positional deviation Δx has a large absolute value, the steering angle will be changed greatly in order for the work vehicle **100** to return to the path **P,** so that the directional deviation Δθ will inevitably have a large absolute value. Conversely, when the positional deviation Δx has a small absolute value, the directional deviation Δθ needs to become closer to zero. Therefore, it may be advantageous to introduce a relatively large weight (i.e., control gain) for the directional deviation Δθ in determining the steering angle.

For the steering control and speed control of the work vehicle **100,** control techniques such as PID control or MPC (Model Predictive Control) may be applied. Applying these control techniques will make for smoothness of the control of bringing the work vehicle **100** closer to the target path **P.**

Note that, when an obstacle is detected by sensing devices such as the cameras **120,** the obstacle sensors **130** and the LiDAR sensor **140** during travel, the controller **180** halts the work vehicle **100.** At this point, the controller **180** may cause the buzzer **220** to present an alarm sound or may transmit an alert signal to the terminal device **400.** In the case where the obstacle is avoidable, the controller **180** may control the drive device **240** such that the obstacle is avoided.

The work vehicle **100** according to the present embodiment can perform self-traveling outside a field as well as inside the field. Outside the field, the processing unit **161** and/or the controller **180** is able to detect objects around the work vehicle **100** (e.g., another vehicle, a pedestrian, etc.) based on data output from sensing devices such as the cameras **120,** the obstacle sensors **130** and the LiDAR sensor **140.** Using the cameras **120** and the LiDAR sensor **140** enables detection of an object located at a relatively distant position from the work vehicle **100.** The controller **180** performs speed control and steering control such that the work vehicle **100** avoids the detected object, thereby realizing self-traveling on a road outside the field.

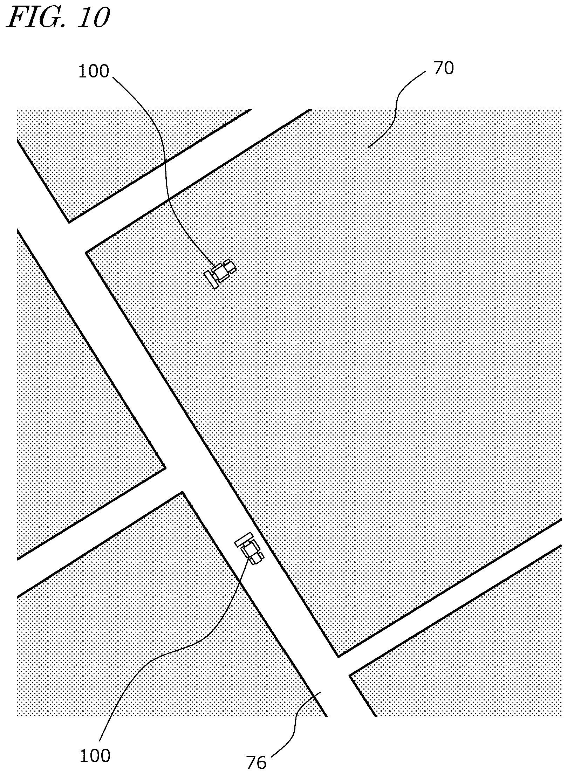

As described above, the work vehicle **100** according to the present embodiment can automatically travel inside the field and outside the field in an unmanned manner. FIG. **10** is a diagram schematically showing an example of state where a plurality of the work vehicles **100** are performing self-traveling inside a field **70** and on a road **76** outside the field **70.** In the storage device **170,** an environment map of a region including a plurality of fields **70** and roads around the fields **70,** and a target path, are recorded. The environment map and the target path may be generated by the management device **600** or the ECU **185.** In the case of traveling on a road, the work vehicle **100** travels along the target path while sensing the surroundings thereof by use of the sensing devices such as the cameras **120,** the obstacle sensors **130** and the LiDAR sensor **140,** with the implement **300** being raised.

### [2-2. Setting of alert zone according to implement]

Next, the process of setting the alert zone according to the implement **300** connected with the work vehicle **100** is described.

In some cases, it is desirable that humans do not enter an area near the implement **300** that is performing work in a field. Therefore, one possible solution is to set an alert zone around the implement **300.** The alert zone refers to an area in which, for example, if it is determined that a human is present in that area, at least one of issuance of a warning, stoppage of work of the implement **300,** and slowdown of the work of the implement **300** is performed.

First, the sensing region, the search region, and the alert zone are separately described.

As previously described, sensing devices, such as the cameras **120,** the obstacle sensors **130** and the LiDAR sensor **140,** sense the environment around the work vehicle **100** and output sensor data. The work vehicle **100** of the present embodiment includes a sensing system **10** (FIG. **3****)** configured to detect objects around the work vehicle **100** using the sensor data output from the sensing devices. The sensing system **10** includes the processing unit **161,** the cameras **120,** the obstacle sensors **130** and the LiDAR sensor **140.**

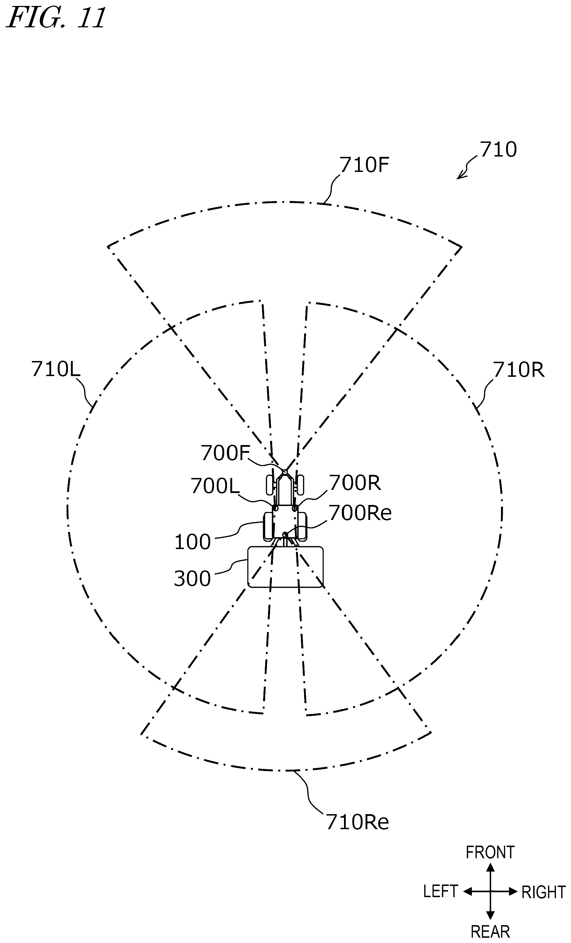

FIG. **11** is a diagram showing an example of a sensing region **710** sensed by the sensing devices.

The sensing region **710** includes a front sensing region **710F,** a rear sensing region **710Re,** a left lateral sensing region **710L,** and a right lateral sensing region **710R.** FIG. **11** shows the sensing regions as viewed in plan from a vertical direction while the work vehicle **100** is on horizontal ground.

In this example, as the sensing devices, the work vehicle **100** includes sensing devices **700F, 700Re, 700L, 700R.** The sensing device **700F** is provided in the front-side portion of the work vehicle **100** to mainly sense part of the surrounding environment extending on the front side of the work vehicle **100.** The sensing device **700Re** is provided in the rear-side portion of the work vehicle **100** to mainly sense part of the surrounding environment extending on the rear side of the work vehicle **100.** The sensing device **700L** is provided in the left-side portion of the work vehicle **100** to mainly sense part of the surrounding environment extending on the left side of the work vehicle **100.** The sensing device **700R** is provided in the right-side portion of the work vehicle **100** to mainly sense part of the surrounding environment extending on the right side of the work vehicle **100.** The sensing devices **700Re, 700L, 700R** can be provided in, for example, the cabin **105** of the work vehicle **100** (FIG. **2****).** The sensing device **700Re** may be provided in the implement **300.**

In the present embodiment, in the front-side portion of the work vehicle **100,** a camera **120** and a LiDAR sensor **140** are provided as the sensing device **700F.** In the rear-side portion of the work vehicle **100,** a camera **120** and a LiDAR sensor **140** are provided as the sensing device **700Re.** In the left-side portion of the work vehicle **100,** a camera **120,** an obstacle sensor **130,** and a LiDAR sensor **140** are provided as the sensing device **700L.** In the right-side portion of the work vehicle **100,** a camera **120,** an obstacle sensor **130,** and a LiDAR sensor **140** are provided as the sensing device **700R.** The sensing devices **700F** and **700Re** may include an obstacle sensor **130.**

In the examples described below, for clearly describing the features, a region sensed by the LiDAR sensor **140** is described as the sensing region **710.**

The LiDAR sensor **140** is capable of sequentially emitting pulses of a laser beam (hereinafter, abbreviated as "laser pulses") while changing the direction of emission and measuring the distance to a point of reflection of each laser pulse based on the difference between the time of emission of each laser pulse and the time of reception of reflection of the laser pulse. The "point of reflection" can be an object in an environment around the work vehicle **100.**

The LiDAR sensor **140** can measure the distance from the LiDAR sensor **140** to an object by an arbitrary method. Examples of the measurement method of the LiDAR sensor **140** include mechanical rotation, MEMS, and phased array type measurement methods. These measurement methods are different in the method of emitting laser pulses (the method of scanning). For example, the mechanical rotation type LiDAR sensor rotates a cylindrical head, which is for emitting laser pulses and detecting reflection of the laser pulses, to scan the surrounding environment in all directions, i.e., 360 degrees, around the axis of rotation. The MEMS type LiDAR sensor uses a MEMS mirror to oscillate the emission direction of laser pulses and scans the surrounding environment in a predetermined angular range centered on the oscillation axis. The phased array type LiDAR sensor controls the phase of light to oscillate the emission direction of the light and scans the surrounding environment in a predetermined angular range centered on the oscillation axis.

As previously described, the sensing region **710** includes the front sensing region **710F,** the rear sensing region **710Re,** the left lateral sensing region **710L,** and the right lateral sensing region **710R.** The front sensing region **710F** is a region sensed by the LiDAR sensor **140** provided in the front-side portion of the work vehicle **100.** The rear sensing region **710Re** is a region sensed by the LiDAR sensor **140** provided in the rear-side portion of the work vehicle **100.** The left lateral sensing region **710L** is a region sensed by the LiDAR sensor **140** provided in the left-side portion of the work vehicle **100.** The right lateral sensing region **710R** is a region sensed by the LiDAR sensor **140** provided in the right-side portion of the work vehicle **100.**

The processing unit **161** (FIG. **3**) detects objects in the search regions around the work vehicle **100** based on the sensor data output from the LiDAR sensors **140.** The search region refers to a portion of the sensing region **710** in which a search for objects is to be conducted. The search regions may be equal in size to, or may be smaller than, the sensing regions **710.** The search region can also be referred to as Region of Interest (ROI).

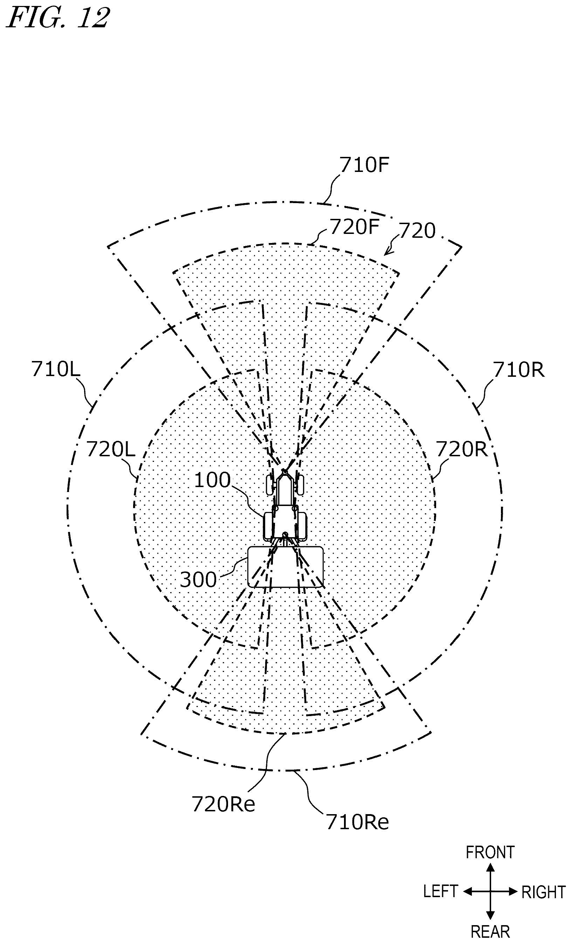

FIG. **12** shows the relationship between sensing regions **710** sensed by LiDAR sensors **140** and search regions **720** in which a search for objects is to be conducted. The shape, size, and position of the search regions can be realized by, for example, changing part of the three-dimensional point cloud data output by the LiDAR sensors **140** which is to be used in search for objects.

The three-dimensional point cloud data output by the LiDAR sensors **140** includes the information about the position of a plurality of points and the information such as the reception intensity of a photodetector (attribute information). The information about the position of a plurality of points is, for example, the information about the emission direction of laser pulses corresponding to the points and the distance between the LiDAR sensors and the points. For example, the information about the position of a plurality of points is the information about the coordinates of the points in a local coordinate system. The local coordinate system is a coordinate system that moves together with the work vehicle **100** and is also referred to as sensor coordinate system. The coordinates of each point can be calculated from the emission direction of laser pulses corresponding to the points and the distance between the LiDAR sensors and the points.

For example, the search region can be set based on the coordinates of each of the points. By selecting points located inside a desired shape in a local coordinate system as points which are to be used in search for objects, the search region of the desired shape can be set.

The search region **720** includes a front search region **720F,** a rear search region **720Re,** a left lateral search region **720L,** and a right lateral search region **720R.**

The search region **720F** can be set by selecting points located inside a predetermined shape in a local coordinate system from a plurality of points indicated by the three-dimensional point cloud data output by the LiDAR sensor **140** provided in the front-side portion of the work vehicle **100.** The search region **720Re** can be set by selecting points located inside a predetermined shape in a local coordinate system from a plurality of points indicated by the three-dimensional point cloud data output by the LiDAR sensor **140** provided in the rear-side portion of the work vehicle **100.**

The search region **720L** can be set by selecting points located inside a predetermined shape in a local coordinate system from a plurality of points indicated by the three-dimensional point cloud data output by the LiDAR sensor **140** provided in the left-side portion of the work vehicle **100.** The search region **720R** can be set by selecting points located inside a predetermined shape in a local coordinate system from a plurality of points indicated by the three-dimensional point cloud data output by the LiDAR sensor **140** provided in the right-side portion of the work vehicle **100.**

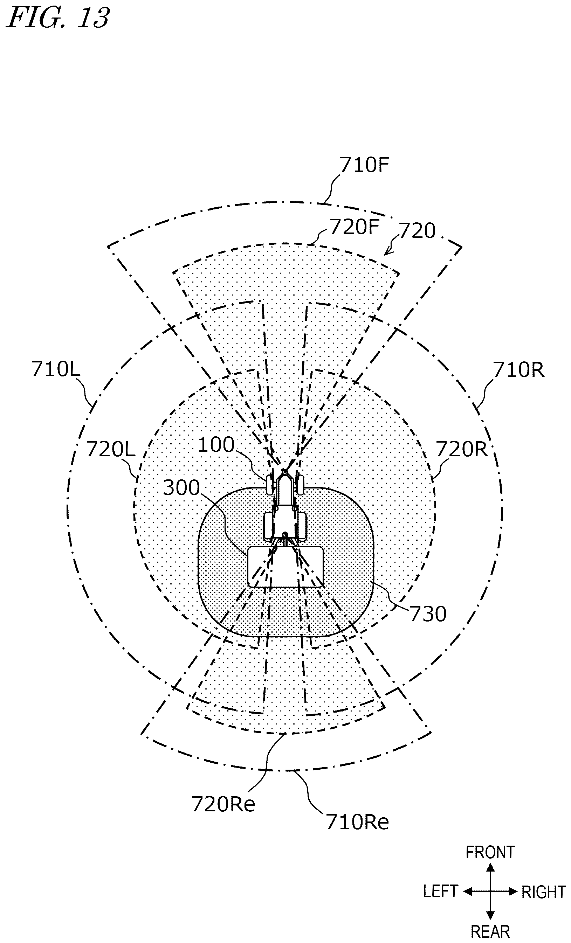

FIG. **13** is a diagram showing the relationship between the search regions **720** and the alert zone **730.** The alert zone **730** can be set in a predetermined area within the search regions **720.** The alert zone **730** can be set by selecting points located inside a predetermined shape in a local coordinate system from a plurality of points indicated by the three-dimensional point cloud data output by the LiDAR sensors **140.** In the present embodiment, the alert zone **730** is set around the implement **300** connected with the work vehicle **100.** The control system **160** (FIG. **3**) determines whether or not a human is present in the set alert zone **730.** If the control system **160** determines that a human is present in the alert zone, the control system **160** controls at least one of the following operations: issuance of a warning, stoppage of work of the implement **300,** and slowdown of the work of the implement **300.**

FIG. **13** shows the alert zone **730** as viewed in plan from a vertical direction while the work vehicle **100** and the implement **300** are on horizontal ground. In the present embodiment, the size of the alert zone **730** as viewed in plan from a vertical direction is changed according to the implement **300** used.

Since the size and operation of the implement can vary among implements, varying the size of the alert zone **730** among the implements can be considered. Setting the size of the alert zone **730** for each of the implements using information inherent to each implement, such as the size of the implement, can be considered.

On the other hand, there are many implement manufacturers, and each manufacturer sells a variety of implements. A very large number of different models of implements have been in circulation in the market. For many models, the information about the size and other specifications is not disclosed by the manufacturers.

If the information necessary for setting the size of the alert zone **730,** such as the size of the implement used, cannot be obtained, it will be difficult to set the size of the alert zone **730.** Even when an implement is used of which the information necessary for setting the size of the alert zone **730** is not disclosed by the manufacturer, the capability of setting the size of the alert zone **730** is required.

In the agricultural management system **1** of the present embodiment, implement information concerning a plurality of types of implements, which is provided by a plurality of users, is obtained, and the obtained implement information is accumulated in the server **600.** The implement information corresponding to identification information of the implement **300** connected with the work vehicle **100** is retrieved from the server **600,** and the size of the alert zone **730** is set based on the retrieved implement information.

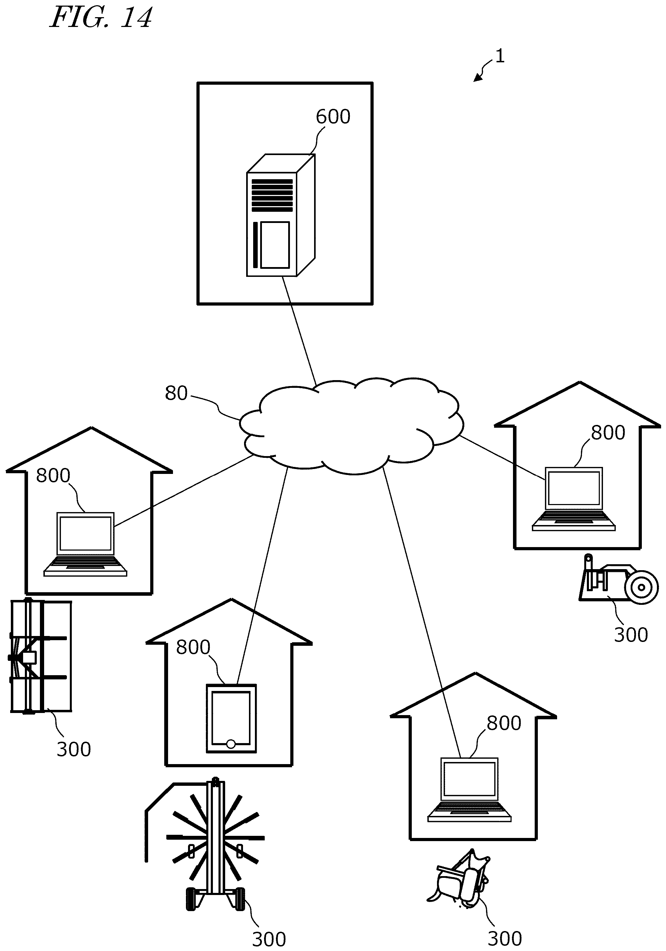

FIG. **14** is a diagram showing the agricultural management system 1 wherein implement information provided by a plurality of users is accumulated in the server **600.** Each of the users can upload information concerning the implement owned and/or used by the user to the server **600** using a terminal device **800.** The terminal device **800** is a computer used by the user. The terminal device **800** can be a stationary computer such as laptop computer or desktop PC (personal computer), or a mobile terminal such as smartphone or tablet computer.

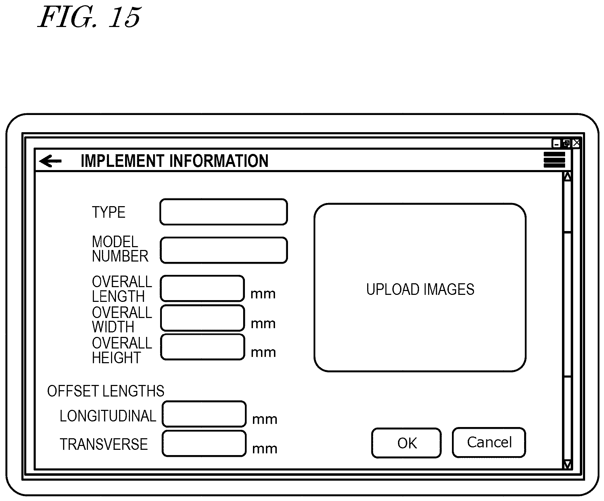

FIG. **15** is a diagram showing an example of an input window for implement information, which is displayed on the display of the terminal device **800.**

In the example shown in FIG. **15****,** users input the type, model number, overall length, overall width, overall height, and offset lengths of the implement as the implement information. The users can also upload image data of the implement as the implement information.

Examples of the type of the implement include tiller, seeder, spreader, transplanter, mower, rake implement, baler, harvester, sprayer, and harrow. These implement types are merely exemplary, and the implement is not limited to these examples.

The model number is a number assigned by the manufacturer to each type of implement and can be formed by a combination of a plurality of arbitrary letters, such as numerical and alphabetical characters. The overall length is a dimension of the implement in the longitudinal direction. The overall width is a dimension of the implement in the transverse direction. The overall height is a dimension of the implement in the vertical direction.

The offset lengths refer to a deviation from the joint of the implement to which a linkage device is connected. The longitudinal offset length refers to a longitudinal length between the front end of the implement and the joint. The transverse offset length refers to a transverse length between the transverse center of the implement and the joint. The position of the joint, which serves as the reference point for the offset lengths, can be, for example, a position of the implement at which the PTO shaft is connected.

The information concerning the lengths of the implement can be obtained by, for example, measuring the lengths of respective dimensions of the implement by users. The size information of the implement, which is used for setting the alert zone **730,** does not need to be strictly accurate but may be approximate values. For example, a measurement error of about ±10% can be tolerated. Since the width of the alert zone **730** can be several meters, setting of the alert zone **730** is possible even if the size values are approximate values.

Users can upload the above-described implement information to the server **600** via the terminal device **800.** The server **600** stores the implement information collected from a plurality of users.

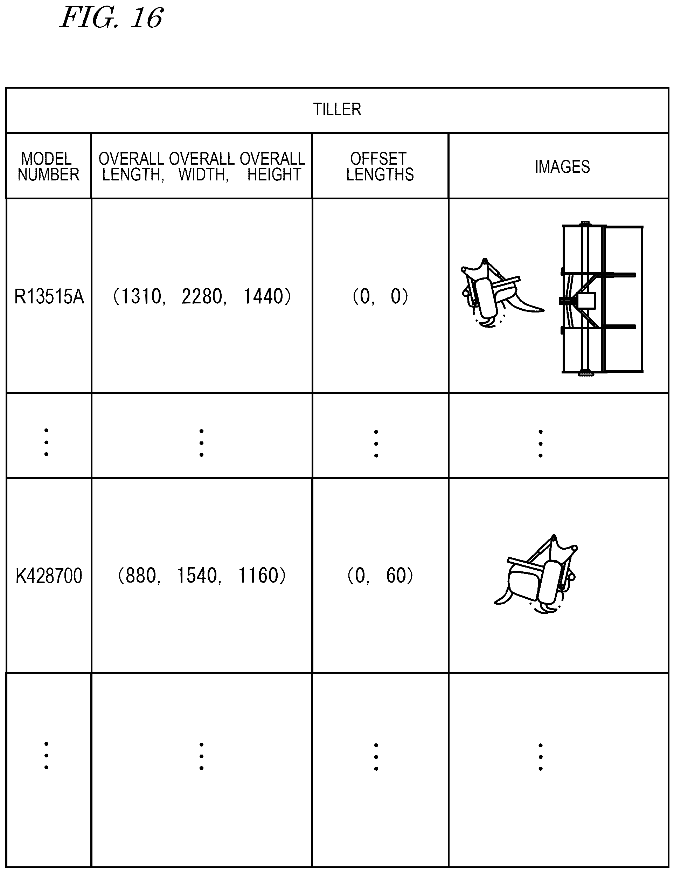

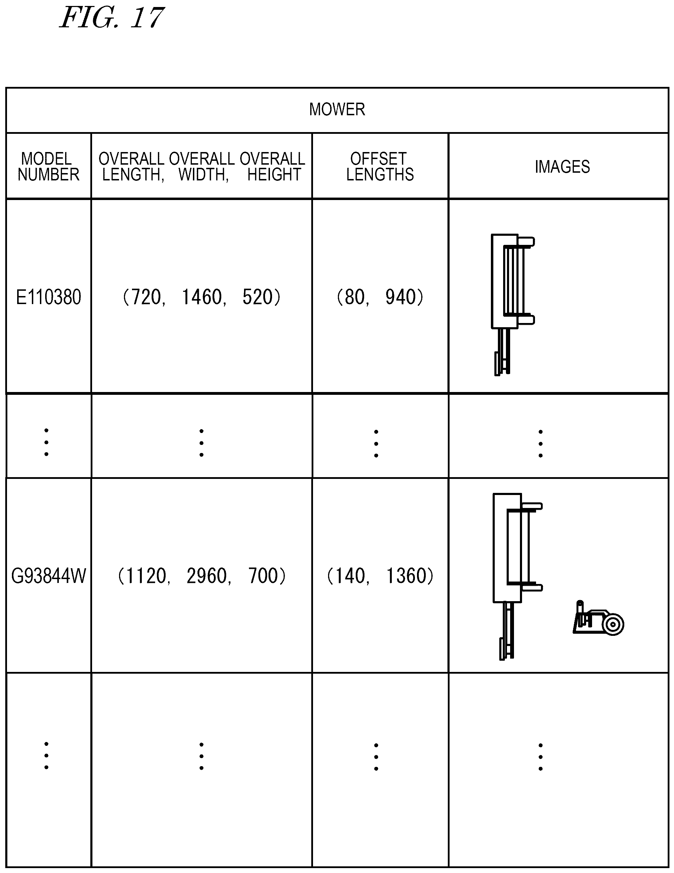

FIG. **16** and FIG. **17** are diagrams showing examples of the implement information stored in the server **600.** The implement information collected from a plurality of users can be sorted by model numbers and stored in the server **600.**

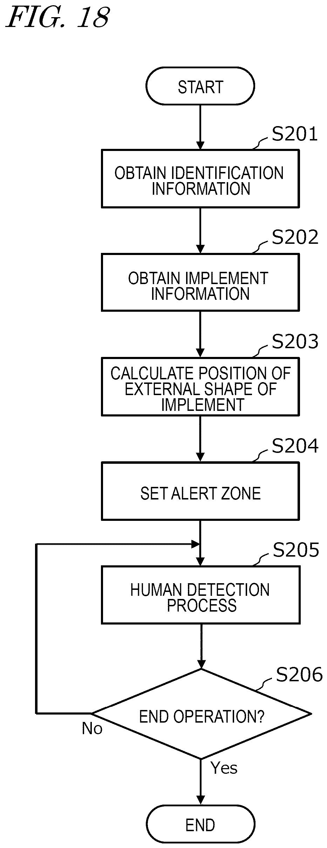

Next, the process of setting the alert zone **730** using the implement information stored in the server **600** is described. FIG. **18** is a flowchart showing an example of the process of setting the alert zone **730** using the implement information stored in the server **600.**

First, identification information which identifies an implement **300** connected with the work vehicle **100** is obtained (step **S201).** The processing unit **161** of the work vehicle **100** obtains the identification information from the implement **300** connected with the work vehicle **100,** for example. The identification information can be, for example, the model number of the implement **300.**

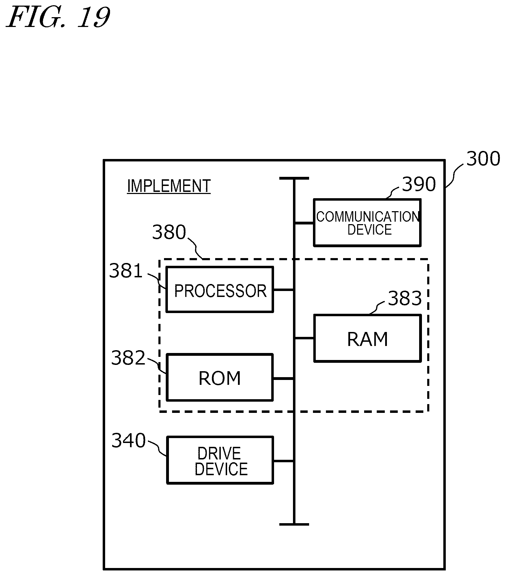

FIG. **19** is a block diagram showing an example of the hardware configuration of the implement **300.** The implement **300** includes a controller **380,** a communication device **390,** and a drive device **340.** These component elements are communicably connected to each other via a bus. The controller **380** includes a processor **381,** a ROM **382,** and a RAM **383.**

The communication device **190** of the work vehicle **100** (FIG. **3**) and the communication device **390** of the implement **300** perform data communication between the work vehicle **100** and the implement **300.** For example, when communication is established in compliance with communication control standards such as ISOBUS based on ISO 11783, it is possible to communicate bidirectionally between the work vehicle **100** and the implement **300.** If the work vehicle **100** and the implement **300** are compatible with a tractor-implement management (TIM) system such as ISOBUS-TIM, control by the work vehicle **100** over the implement **300** and control by the implement **300** over the work vehicle **100** are possible. These communications can be established by wired communication but may be established by wireless communication.

The identification information is stored in advance in a memory device in the implement **300,** for example, in the ROM **382.** As previously described, the work vehicle **100** and the implement **300** are capable of establishing communication in compliance with communication control standards such as ISOBUS.

When the implement **300** is connected with the work vehicle **100,** the processor **381** retrieves the identification information from the ROM **382** and outputs the retrieved identification information to the work vehicle **100** via the communication device **390.** The processing unit **161** of the work vehicle **100** outputs the received identification information to the server **600** via the communication device **190.** The processing unit **161** requests the server **600** to send implement information corresponding to the identification information to the work vehicle **100.**

The processor **660** of the server **600** retrieves implementation information corresponding to the model number indicated by the received identification information from the storage device **650** and sends the retrieved implementation information to the work vehicle **100** via the communication device **690.** The communication device **190** of the work vehicle **100** receives the implement information sent from the server **600,** and the processing unit **161** can obtain the implement information (step **S202).**

The implement information includes size information, such as the overall length, overall width, overall height, offset lengths of the implement **300.** The processing unit **161** sets the size of the alert zone **730** using these pieces of the size information, for example.

The processing unit **161** calculates the position of at least part of the external shape of the implement **300** in a local coordinate system of the work vehicle **100** and the implement **300,** which are connected with each other, based on the size information (step **S203).**

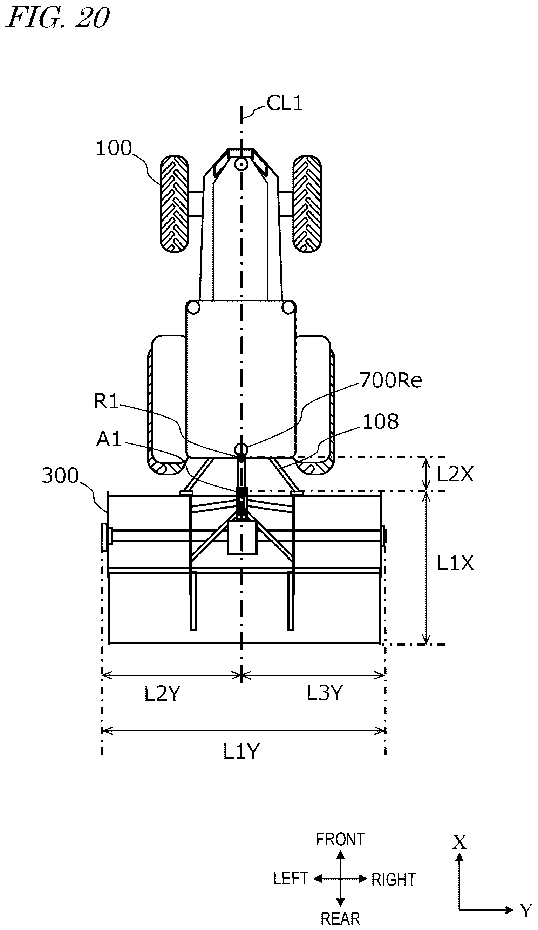

FIG. **20** is a diagram showing an example of the method of calculating the position of at least part of the external shape of the implement **300** in a local coordinate system. The processing unit **161** executes, for example, the operations described below to calculate the coordinates of at least part of the external shape of the implement **300.**

In the local coordinate system of the present embodiment, when the work vehicle **100** and the implement **300,** which are connected with each other, are traveling in a straight line on a flat ground, the longitudinal direction of the vehicle is referred to as X direction, and the transverse direction of the vehicle is referred to as Y direction. The direction from rear to front is referred to as +X direction, and the direction from left to right is referred to as +Y direction. ISO 11783 defines the device geometry as follows: "In the X-axis, the normal travelling direction is specified as positive" and "In the Y-axis, the right side of the device with respect to the normal travelling direction is specified as positive". Based on that definition of the device geometry, the X and Y directions in the local coordinate system of the present embodiment are defined. The unit of the coordinate values of the local coordinate system is arbitrary, and herein we use "millimeter" as an example.

In a local coordinate system for the work vehicle **100** alone and in a local coordinate system for the implement **300** alone, the X and Y directions and the unit of coordinate values are defined in the same way as described above.

In the example shown in FIG. **20****,** a tiller, which is an example of the implement **300,** is connected with the work vehicle **100.** The overall length of the implement **300** is L1X, and the overall width of the implement **300** is L1Y. Both of the longitudinal and transverse offset lengths are zero.

The work vehicle **100** and the implement **300** are connected together using a linkage device **108.** The reference point **R1** in the local coordinate system can be set at an arbitrary position of the work vehicle **100.** The coordinate values of the reference point **R1** are stored in advance in the storage device **170** of the work vehicle **100.** In the example shown in FIG. **20****,** the reference point **R1** is set on the center line **CL1** that extends in the longitudinal direction through the transverse center of the work vehicle **100.** The Y coordinate of the reference point **R1** is equal to the Y coordinate of the center line **CL1.** The X coordinate of the reference point **R1** is set to the X coordinate of the joining position of the work vehicle **100** and the linkage device **108** (i.e. approximately the position of the front end of the linkage device **108).** The PTO shaft extends backwards from the position in the rear part of the work vehicle **100** at which the center line **CL1** passes.

The value of the longitudinal length **L2X** of the linkage device **108** is stored in advance in the storage device **170** of the work vehicle **100.** The value of the length **L2X** may be input by the user using an input device **420,** for example. The X coordinate of the rear end position **A1** of the linkage device **108** is equal to the X coordinate of the front end of the implement **300.**

In the example shown in FIG. **20****,** the offset lengths are zero. Therefore, the X coordinate of a rear-side position away from the reference point **R1** by the length **L2X** is equal to the X-coordinate of the front end of the implement **300.** The X coordinate of a rear-side position away from the reference point **R1** by the sum of the length **L1X** and the length **L2X** is equal to the X coordinate of the rear end of the implement **300.**

The Y coordinate of a position on the transverse center of the implement is equal to the Y coordinate of the center line **CL1.** The length **L2Y** between the center line **CL1** and the left end of the implement **300** is 1/2 of the overall width **L1Y.** The length **L3Y** between the center line **CL1** and the right end of the implement **300** is 1/2 of the overall width **L1Y.** The Y coordinate of a left-side position away from the center line **CL1** by the length **L2Y** is equal to the Y coordinate of the left end of the implement **300.** The Y coordinate of a right-side position away from the center line **CL1** by the length **L3Y** is equal to the Y coordinate of the right end of the implement **300.**

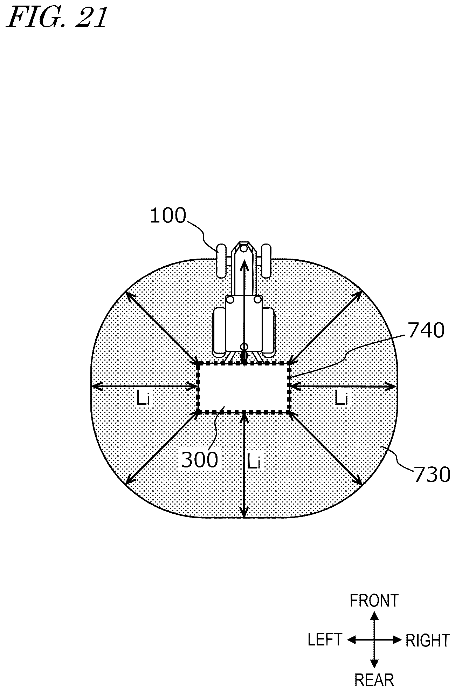

The processing unit **161** calculates the X coordinates of the front and rear ends of the implement **300** and also calculates the Y coordinates of the left and right ends of the implement **300** as described above. The processing unit **161** can use these coordinates to obtain data concerning the external shape **740** of a rectangle that is generally conformable to the external shape of the implement **300** (FIG. **21****)** and the coordinates of respective parts of the external shape **740.** The external shape **740** of this rectangle passes through the front, rear, left and right ends of the implement **300.**

FIG. **21** is a diagram showing an example of the alert zone **730** set around the implement **300.**

The processing unit **161** sets a range of a predetermined distance from the calculated position of at least part of the external shape of the implement **300** as the alert zone **730.** In the example shown in FIG. **21****,** a range of a predetermined distance **Li** from the external shape **740** is set as the alert zone **730** (step **S204** of FIG. **18****).** The predetermined distance **Li** is, for example, 2 to 7 meters but is not limited to such a value.

While the implement **300** is performing work in a field, the processing unit **161** determines whether or not a human is present in the set alert zone **730** using sensor data output from one or more of the cameras **120,** the obstacle sensor **130** and the LiDAR sensor **140** (step **S205).** When two or more types of sensors are used, a region which is difficult for one sensor to sense can be covered by a different sensor. For example, a blind spot area of the LiDAR sensor **140** can be covered by sensing with the use of the cameras **120** and/or the obstacle sensor **130.**

The processing unit **161** estimates whether or not point cloud data representing a human is present in the three-dimensional point cloud data output from the LiDAR sensors **140** using, for example, an estimation model generated by machine learning, thereby determining whether or not a human is present in the alert zone **730.** Also, for example, the processing unit **161** estimates whether or not image data representing a human is present in the image data output from the cameras **120** using an estimation model generated by machine learning, thereby determining whether or not a human is present in the alert zone **730.** Such an estimation model is stored in advance in the storage device **170.**

The processing unit **161** may determine whether or not a human is present in the alert zone **730** using both the three-dimensional point cloud data output from the LiDAR sensors **140** and the image data output from the cameras **120.** For example, when it is determined using the three-dimensional point cloud data that an object is present which is highly probably a human, image data corresponding to the position of the object may be analyzed to further determine whether or not the object is human.

The processing unit **161** repeats the process of step **S205** until a command to end the operation is given (step **S206)** .

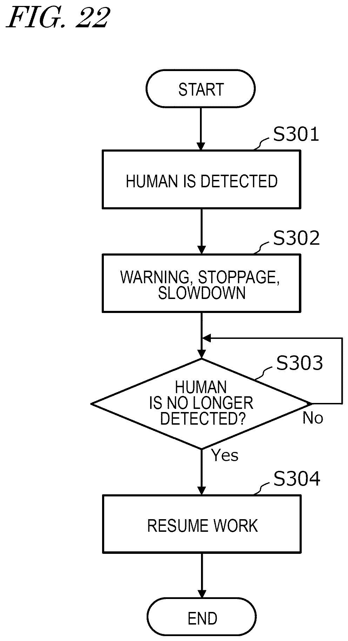

If it is determined that there is a human in the alert zone **730,** the control system controls at least one of the following operations: issuance of a warning, stoppage of work of the implement **300,** and slowdown of the work of the implement **300.** FIG. **22** is a flowchart showing an example of a process that is performed if it is determined that a human is present in the alert zone **730.**

If the processing unit **161** determines that a human is detected in the alert zone **730** (step **S301),** the controller **180** (FIG. **3**) controls at least one of the following operations: issuance of a warning from the buzzer **220,** stoppage of work of the implement **300,** and slowdown of the work of the implement **300** (step **S302).** The controller **180** can stop or slow down the work of the implement **300** by stopping or slowing down the rotation of the PTO shaft. The controller **180** may communicate with the controller **380** of the implement **300** to stop or slow down the work of the implement **300.** The controller **180** may stop or slow down the work of the implement **300** while emitting an alarm sound from the buzzer **220.** In addition, the controller **180** may stop or slow down the traveling of the work vehicle **100** in parallel.

If the processing unit **161** determines that the human is no longer detected in the alert zone **730** because, for example, the human has moved away, the controller **180** causes the implement **300** to resume the normal operation (step **S304)** and returns to the process of step **S206** shown in FIG. **18****.**

As described above, in the present embodiment, implement information concerning a plurality of types of implements, which is provided by a plurality of users, is obtained, and the obtained implement information is accumulated in the server **600.** The processing unit **161** retrieves implement information corresponding to the identification information of the implement **300** connected with the work vehicle **100** from the server **600** and sets the size of the alert zone **730** based on the retrieved implement information.

Thus, even when an implement is used of which the information necessary for setting the size of the alert zone **730** is not disclosed by the manufacturer, it is possible to set the size of the alert zone **730** suitable for each implement by using the implement information provided by the users.

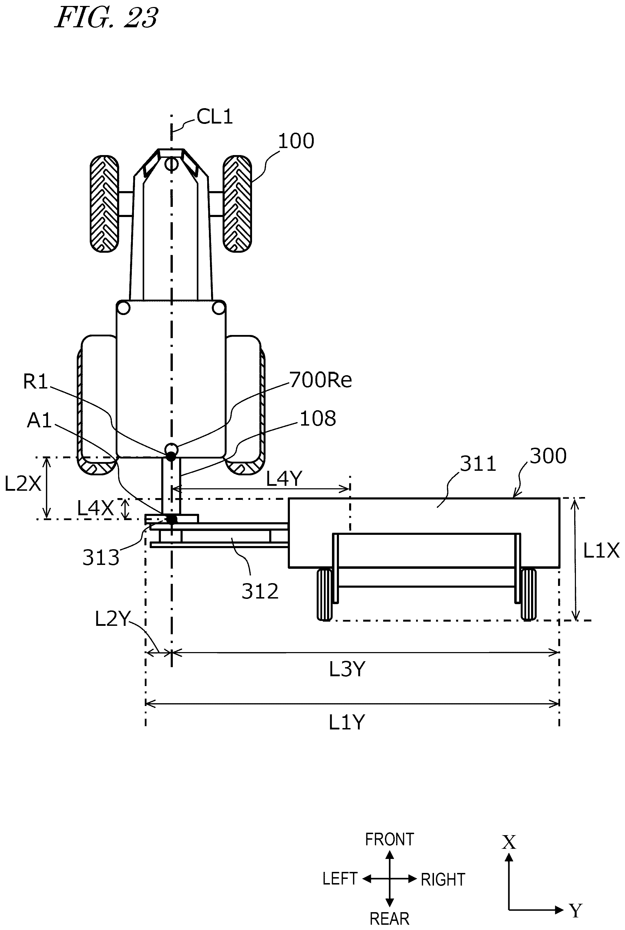

Next, setting of the alert zone **730** with consideration for offset is described. FIG. **23** is a diagram showing an example of the method of calculating the position of at least part of the external shape of the implement **300** in a local coordinate system.

In the example shown in FIG. **23****,** an offset-type mower, which is an example of the implement **300,** is connected with the work vehicle **100.**

The implement **300** shown in FIG. **23** includes a grass cutting section **311** for cutting grass and a linkage frame **312** attached to the grass cutting section **311.** The linkage frame **312** has a shape that is elongated in the transverse direction, and the right part of the linkage frame **312** and the left part of the grass cutting section **311** are connected together. A linkage portion **313** provided at the left part of the linkage frame **312** is connected with the linkage device **108.**

The longitudinal offset length **L4X** refers to the length in the longitudinal direction between the front end of the implement **300** and the linkage portion. The transverse offset length **L4Y** refers to the length in the transverse direction between the transverse center of the implement **300** and the linkage portion.

The X coordinate of a rear-side position away from the reference point **R1** by the value of the difference between the length **L2X** and the length **L4X** is equal to the X coordinate of the front end of the implement **300.** The X coordinate of a rear-side position away from the X coordinate of the front end of the implement **300** by the length **L1X** is equal to the X coordinate of the rear end of the implement **300.**

The value of the sum of 1/2 of the overall width **L1Y** and the offset length **L4Y** is equal to the length **L3Y** between the center line **CL1** and the right end of the implement **300.** The value of the difference between 1/2 of the overall width **L1Y** and the offset length **L4Y** is equal to the length **L2Y** between the center line **CL1** and the left end of the implement **300.** The Y coordinate of a left-side position away from the center line **CL1** by the length **L2Y** is equal to the Y coordinate of the left end of the implement **300.** The Y coordinate of a right-side position away from the center line **CL1** by the length **L3Y** is equal to the Y coordinate of the right end of the implement **300.**

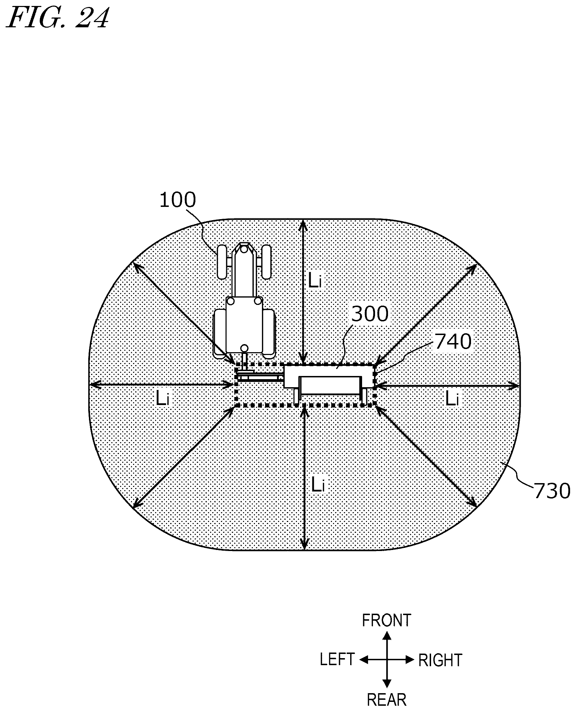

The processing unit **161** calculates the X coordinates of the front and rear ends of the implement **300** and also calculates the Y coordinates of the left and right ends of the implement **300** as described above. The processing unit **161** can use these coordinates to obtain data concerning the external shape **740** of a rectangle that is generally conformable to the external shape of the implement **300** (FIG. **24****)** and the coordinates of respective parts of the external shape **740.** The external shape **740** of this rectangle passes through the front, rear, left and right ends of the implement **300.**

FIG. **24** is a diagram showing an example of the alert zone **730** set around the implement **300.** In the example shown in FIG. **24****,** the processing unit **161** sets a range of a predetermined distance **Li** from the external shape **740** as the alert zone **730.**

The predetermined distance **Li** may be changed according to the type of the implement **300** connected with the work vehicle **100.** The processing unit **161** changes the predetermined distance **Li** according to the type of the implement **300** connected with the work vehicle **100.** For example, when the implement **300** is a mower, the predetermined distance **Li** is larger than when the implement **300** is a tiller. The desirable distance of a human from the implement **300** can vary according to the type of the implement. By changing the predetermined distance **Li** according to the type of the implement **300,** it is possible to set the size of the alert zone **730** suitable for the implement **300** connected with the work vehicle **100.**

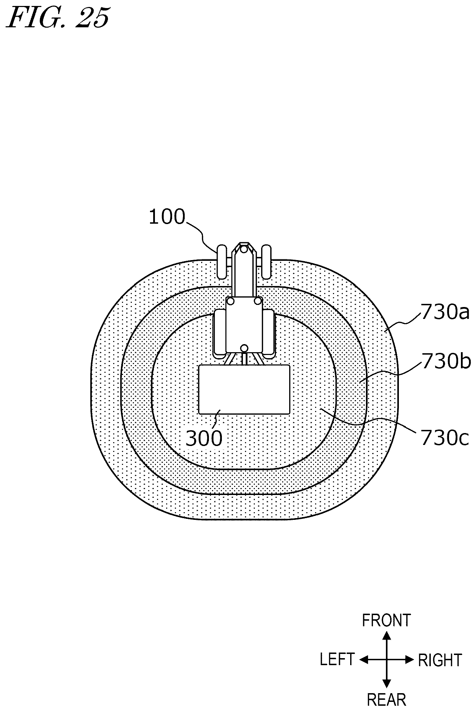

The alert zone **730** to be set is not limited to a single alert zone, but a plurality of alert zones **730** may be set. FIG. **25** is a diagram showing an example of a plurality of alert zones **730.** In the example shown in FIG. **25****,** the processing unit **161** sets a plurality of alert zones **730a, 730b, 730c** having different sizes. The alert zone **730a** is the largest, the alert zone **730b** is the second largest, and the alert zone **730c** is the smallest.

The controller **180** varies the operation performed when a human is present in an alert zone among the plurality of alert zones **730a, 730b, 730c.** For example, if the processing unit **161** determines that a human is present in the alert zone **730a** while no human is present in the alert zones **730b** and **730c,** the controller **180** controls the buzzer **220** to emit an alarm sound. If the processing unit **161** determines that a human is present in the alert zone **730b** while no human is present in the alert zone **730c,** the controller **180** controls the buzzer **220** to emit an alarm sound and controls the implement **300** to slow down the work of the implement **300.** If the processing unit **161** determines that a human is present in the alert zone **730c,** the controller **180** controls the buzzer **220** to emit an alarm sound and controls the implement **300** to stop the work of the implement **300.**

By varying the operation among a plurality of alert zones, it is possible to realize a suitable operation for the distance between the implement **300** and a human.

In the above-described embodiments, the processing unit **161** retrieves the implementation information from the server **600** and sets the alert zone **730** using the retrieved implementation information. However, if the processing unit **161** fails to obtain the identification information of the implement **300,** or if the implement information corresponding to the identification information is not stored in the server **600,** it will be difficult to obtain the implement information from the server **600.** In this case, the implement **300** may be sensed using the sensing devices **700** to detect the position of at least part of the external shape of the implement **300** in a local coordinate system.

If the processing unit **161** fails to obtain the identification information, or if the processing unit **161** fails to retrieve the implement information corresponding to the identification information, the processing unit **161** controls the sensing devices **700** to sense the implement **300.** For example, the processing unit **161** controls the LiDAR sensor **140** to sense the implement **300.** The three-dimensional point cloud data output from the LiDAR sensor **140** includes, for example, information concerning the coordinates of each of the plurality of points in a local coordinate system.

The processing unit **161** specifies point cloud data representing the implement **300** in the three-dimensional point cloud data output from the LiDAR sensors **140** using, for example, an estimation model generated by machine learning. The processing unit **161** calculates the coordinates of a plurality of positions on the external shape of the implement **300** using the information concerning the coordinates of each of a plurality of points included in the point cloud data representing the implement **300.** The processing unit **161** sets a range of the predetermined distance **Li** from the calculated positions of the external shape of the implement **300** as the alert zone **730.** Thus, the alert zone **730** can be set even if the processing unit **161** fails to obtain the identification information or if the processing unit **161** fails to retrieve the implement information from the server **600.**

Note that the sensing devices for sensing the implement **300** may be provided in other machines than the work vehicle **100.** For example, a LiDAR sensor and/or camera mounted to a drone may be used to sense the implement **300.** Alternatively, for example, a camera or the like installed in a storing place for the work vehicle **100** or in a field may be used to sense the implement **300.**

The sensing system **10** of the present embodiment can be mounted on an agricultural machine lacking such functions, as an add-on. Such a system may be manufactured and marketed independently from the agricultural machine. A computer program for use in such a system may also be manufactured and marketed independently from the agricultural machine. The computer program may be provided in a form stored in a non-transitory computer-readable storage medium, for example. The computer program may also be provided through downloading via telecommunication lines (e.g., the Internet).

Part or all of the processes that are to be performed by the processing unit **161** in the sensing system **10** may be performed by another device. Such another device may be at least one of the processor **660** of the management device **600,** the processor **460** of the terminal unit **400,** and the operational terminal **200.** In this case, such another device and the processing unit **161** function as a processing unit of the sensing system **10,** or such another device functions as a processing unit of the sensing system **10.** For example, when part of the processes that are to be performed by the processing unit **161** is performed by the processor **660** of the management device **600,** the processing unit **161** and the processor **660** function as a processing unit of the sensing system **10.**

Part or all of the processes that are to be performed by the processing unit **161** may be performed by the controller **180.** In this case, the controller **180** and the processing unit **161** function as a processing unit of the sensing system **10,** or the controller **180** functions as a processing unit of the sensing system **10.**

As described above, the present disclosure includes agricultural management systems described below.

### [Item 1]

An agricultural management system **1** comprising:
a server **600** capable of obtaining implement information concerning a plurality of types of implements from a plurality of users and storing the obtained implement information; and
a processing unit **161** capable of setting a size of an alert zone **730** around an implement **300** connected with a work vehicle **100,** wherein
the processing unit **161** obtains identification information which identifies the implement **300,**
the processing unit **161** retrieves implement information corresponding to the identification information from the server **600,** and
the processing unit **161** sets the size of the alert zone **730** based on the retrieved implement information.

### [Item 2]

The agricultural management system **1** of Item 1, wherein
the implement information corresponding to the identification information includes size information indicative of a size of the implement **300,** and
the processing unit **161** sets the size of the alert zone **730** based on the size information.

### [Item 3]

The agricultural management system **1** of Item 2, wherein
the processing unit **161** calculates a position of at least part of an external shape of the implement **300** connected with the work vehicle **100** based on the size information, and
the processing unit **161** sets the size of the alert zone **730** based on the calculated position of the at least part of the external shape of the implement **300.**

### [Item 4]

The agricultural management system **1** of Item 3, wherein the processing unit **161** sets a range of a predetermined distance **Li** from the calculated position of the at least part of the external shape of the implement **300** as the alert zone **730.**

### [Item 5]

The agricultural management system **1** of Item 4, wherein the processing unit **161** changes the predetermined distance **Li** according to a type of the implement **300** connected with the work vehicle **100.**

### [Item 6]

The agricultural management system **1** of any of Items 1 to 5, further comprising a first sensing device **700** to sense at least part of an external shape of the implement **300** and output sensor data,
wherein if the processing unit **161** fails to obtain the identification information or if the processing unit **161** fails to retrieve the implement information corresponding to the identification information, the processing unit **161** sets a size of the alert zone **730** based on the sensor data.

### [Item 7]

The agricultural management system **1** of any of Items 1 to 6, further comprising:
a second sensing device **700** to sense the set alert zone **730** and output sensor data; and
a controller **180** to determine whether or not a human is present in the set alert zone **730** based on the sensor data output from the second sensing device **700** and, if the controller **180** determines that a human is present in the set alert zone **730,** control at least one of the following operations: issuance of a warning, stoppage of work of the implement **300,** and slowdown of the work of the implement **300.**

### [Item 8]

The agricultural management system **1** of any of Items 1 to 7, wherein
the processing unit **161** sets a plurality of alert zones **730** having different sizes, and
the operation performed when a human is present in the alert zone **730** is varied among the plurality of alert zones **730.**

### [Item 9]

The agricultural management system **1** of any of Items 1 to 8, wherein
the processing unit **161** is provided in the work vehicle **100,**
the processing unit **161** requests the implement information corresponding to the identification information from the server **600,**
the server **600** outputs the implement information requested by the processing unit **161,** and
the processing unit **161** obtains the implement information output from the server **600.**

### INDUSTRIAL APPLICABILITY

The techniques according to the present disclosure are particularly useful in the fields of agricultural machines, such as tractors, harvesters, rice transplanters, vehicles for crop management, vegetable transplanters, mowers, seeders, spreaders, or agricultural robots, for example.

### REFERENCE SIGNS LIST

**1:** agriculture management system, **10:** sensing system, **50:** GNSS satellite, **60:** reference station, **70:** field, **72:** work area, **74:** headlands, **76:** road, **80:** network, **100:** work vehicle, **101:** vehicle body, **102:** prime mover (engine), **103:** transmission, **104:** wheels, **105:** cabin, **106:** steering device, **107:** driver's seat, **108:** linkage device, **110:** positioning device, **111:** GNSS receiver, **112:** RTK receiver, **115:** inertial measurement unit (IMU), **116:** processing circuit, **120:** camera, **130:** obstacle sensor, **140:** LiDAR sensor, **150:** sensors, **152:** steering wheel sensor, **154:** angle-of-turn sensor, **156:** rotation sensor, **160:** control system, **161:** processing unit, **170:** storage device, **180:** controller, **181-185:** ECU, **190:** communication device, **200:** operational terminal, **210:** operation switches, **220:** buzzer, **240:** drive device, **300:** implement, **340:** drive device, **380:** controller, **390:** communication device, **400:** terminal unit, **420:** input device, **430:** display device, **450:** storage device, **460:** processor, **470:** ROM, **480:** RAM, **490:** communication device, **600:** management device (server), **660:** processor, **650:** storage device, **670:** ROM, **680:** RAM, **690:** communication device, **700:** sensing device, **710:** sensing region, **720:** search region, **730:** alert zone

## Claims

1. An agricultural management system (1) comprising:
a server (600) capable of obtaining implement information concerning a plurality of types of implements (300) from a plurality of users and storing the obtained implement information; and
a processing unit (161) capable of setting a size of an alert zone around (730) a first implement (300) connected with a work vehicle (100), wherein
the processing unit (161) obtains identification information which identifies the first implement (300),
the processing unit (161) retrieves implement information corresponding to the identification information from the server (600), and
the processing unit (161) sets the size of the alert zone (730) based on the retrieved implement information.

2. The agricultural management system (1) of claim 1, wherein
the implement information corresponding to the identification information includes size information indicative of a size of the first implement (300), and
the processing unit (161) sets the size of the alert zone (730) based on the size information.

3. The agricultural management system (1) of claim 2, wherein
the processing unit (161) calculates a position of at least part of an external shape of the first implement (300) connected with the work vehicle (100) based on the size information, and
the processing unit (161) sets the size of the alert zone (730) based on the calculated position of the at least part of the external shape of the first implement (300).

4. The agricultural management system (1) of claim 3, wherein the processing unit (161) sets a range of a predetermined distance (Li) from the calculated position of the at least part of the external shape of the first implement (300) as the alert zone (730).

5. The agricultural management system (1) of claim 4, wherein the processing unit (161) changes the predetermined distance (Li) according to a type of the first implement (300) connected with the work vehicle (100).

6. The agricultural management system (1) of any of claims 1 to 5, further comprising a first sensing device (700) to sense at least part of an external shape of the first implement (300) and output sensor data,
wherein when the processing unit (161) fails to obtain the identification information or when the processing unit fails (161) to retrieve the implement information corresponding to the identification information, the processing unit (161) sets a size of the alert zone (730) based on the sensor data.

7. The agricultural management system (1) of any of claims 1 to 5, further comprising:
a second sensing device (700) to sense the set alert zone (730) and output sensor data; and
a controller (180) to determine whether or not a human is present in the set alert zone (730) based on the sensor data output from the second sensing device (700) and, when the controller (180) determines that a human is present in the set alert zone (730), control at least one of the following operations: issuance of a warning, stoppage of work of the first implement (300), and slowdown of the work of the first implement (300).

8. The agricultural management system (1) of any of claims 1 to 5, wherein
the processing unit (161) sets a plurality of alert zones (730) having different sizes, and
the operation performed when a human is present in the alert zone (730) is varied among the plurality of alert zones (730).

9. The agricultural management system (1) of any of claims 1 to 5, wherein
the processing unit (161) is provided in the work vehicle (100),
the processing unit (161) requests the implement information corresponding to the identification information from the server (600),
the server (600) outputs the implement information requested by the processing unit (161), and
the processing unit (161) obtains the implement information output from the server (600).
